# EUROPEAN PATENT APPLICATION

(11) **EP 4 819 755 A1**
(43) Date of publication of application: **07.10.2026**
(21) Application number: 24896458.7
(22) Date of filing: 25.11.2024
(51) Int. Cl.: H04W 80/06

(54) **INFORMATION TRANSMISSION METHOD AND APPARATUS, TERMINAL, DEVICE, AND CORE NETWORK FUNCTION**

(30) Priority: 01.12.2023 CN 202311637697
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Conti, Marco
(86) International application number: PCT/CN2024/134118
(87) International publication number: WO 2025/113368

(57) **Abstract**

This application discloses an information transmission method and apparatus, a terminal, a device, and a core network function, and pertains to the technical field of communications. The information transmission method in embodiments of this application includes: obtaining, by a terminal, a first configuration, where the first configuration is used for configuring a dedicated bearer for information transmission, and the dedicated bearer is independent of an SRB and a DRB; and transmitting, by the terminal, information through the dedicated bearer.

## Description

### CROSS-REFERENCE TO RELATED APPLICATIONS

This application claims priority to Chinese Patent Application No. 202311637697.9 filed in China on December 01, 2023, the entire contents of which are incorporated herein by reference.

### TECHNICAL FIELD

This application pertains to the technical field of communications, and specifically relates to an information transmission method and apparatus, a terminal, a device, and a core network function.

### BACKGROUND

In some related technologies, a terminal can use only a signaling radio bearer (Signaling Radio Bearer, SRB) or a data radio bearer (Data Radio Bearer, DRB) for transmission, resulting in relatively poor transmission performance of the terminal.

### SUMMARY

Embodiments of this application provide an information transmission method and apparatus, a terminal, a device, and a core network function, which can solve the problem of relatively poor transmission performance of terminals.

In a first aspect, an information transmission method is provided, including:
obtaining, by a terminal, a first configuration, where the first configuration is used for configuring a dedicated bearer for information transmission, and the dedicated bearer is independent of an SRB and a DRB; and
transmitting, by the terminal, information through the dedicated bearer.

In a second aspect, an information transmission method is provided, including:
sending, by a first radio access network device, a first configuration to a terminal, where the first configuration is used for configuring a dedicated bearer for information transmission, and the dedicated bearer is independent of an SRB and a DRB; and
receiving, by the first radio access network device, information from the terminal through the dedicated bearer.

In a third aspect, an information transmission method is provided, including:
sending, by a core network function, a trigger message for triggering information transmission to a radio access network device; and
receiving, by the core network function, information from the radio access network device or a control node;
where the information is information transmitted by a terminal through a dedicated bearer; or the information is information generated based on information transmitted by a terminal through a dedicated bearer; where the dedicated bearer is a dedicated bearer for information transmission, and the dedicated bearer is independent of an SRB and a DRB.

In a fourth aspect, a capability information reporting method is provided, including:
reporting, by a terminal, capability information of a dedicated bearer;
where the dedicated bearer is a dedicated bearer for information transmission, and the dedicated bearer is independent of an SRB and a DRB.

In a fifth aspect, a capability information receiving method is provided, including:
receiving, by a radio access network device, capability information that is reported by a terminal and that is of a dedicated bearer of the terminal;
where the dedicated bearer is a dedicated bearer for information transmission, and the dedicated bearer is independent of an SRB and a DRB.

In a sixth aspect, an information transmission apparatus is provided, including:
an obtaining module, configured to obtain a first configuration, where the first configuration is used for configuring a dedicated bearer for information transmission, and the dedicated bearer is independent of a signaling radio bearer SRB and a data radio bearer DRB; and
a transmission module, configured to transmit information through the dedicated bearer.

In a seventh aspect, an information transmission apparatus is provided, including:
a first sending module, configured to send a first configuration to a terminal, where the first configuration is used for configuring a dedicated bearer for information transmission, and the dedicated bearer is independent of a signaling radio bearer SRB and a data radio bearer DRB; and
a first receiving module, configured to receive information from the terminal through the dedicated bearer.

In an eighth aspect, an information transmission apparatus is provided, including:
a sending module, configured to send a trigger message for triggering information transmission to a radio access network device; and
a receiving module, configured to receive information from the radio access network device or a control node;
where the information is information transmitted by a terminal through a dedicated bearer; or the information is information generated based on information transmitted by a terminal through a dedicated bearer; where the dedicated bearer is a dedicated bearer for information transmission, and the dedicated bearer is independent of a signaling radio bearer SRB and a data radio bearer DRB.

In a ninth aspect, a capability information reporting apparatus is provided, including:
a reporting module, configured to report capability information of a dedicated bearer;
where the dedicated bearer is a dedicated bearer for information transmission, and the dedicated bearer is independent of an SRB and a DRB.

In a tenth aspect, a capability information receiving apparatus is provided, including:
a receiving module, configured to receive capability information that is reported by a terminal and that is of a dedicated bearer of the terminal;
where the dedicated bearer is a dedicated bearer for information transmission, and the dedicated bearer is independent of an SRB and a DRB.

In an eleventh aspect, a terminal is provided, where the terminal includes a processor and a memory. The memory stores a program or an instruction capable of running on the processor, and when the program or instruction is executed by the processor, the steps of the information transmission method on the terminal side provided in the embodiments of this application are implemented, or when the program or instruction is executed by the processor, the steps of the capability information reporting method provided in the embodiments of this application are implemented.

In a twelfth aspect, a terminal is provided, including a processor and a communication interface, where the communication interface is configured to obtain a first configuration, the first configuration is used for configuring a dedicated bearer for information transmission, and the dedicated bearer is independent of an SRB and a DRB; and a transmission module, configured to transmit information through the dedicated bearer.

In a twelfth aspect, a terminal is provided, including a processor and a communication interface, where the communication interface is configured to report capability information of a dedicated bearer; where the dedicated bearer is a dedicated bearer for information transmission, and the dedicated bearer is independent of an SRB and a DRB.

In a thirteenth aspect, a radio access network device is provided, and the radio access network device includes a processor and a memory. The memory stores a program or an instruction capable of running on the processor, and when the program or instruction is executed by the processor, the steps of the information transmission method on the radio access network device side provided in the embodiments of this application are implemented, or when the program or instruction is executed by the processor, the steps of the capability information receiving method provided in the embodiments of this application are implemented.

In a fourteenth aspect, a radio access network device is provided, including a processor and a communication interface, where the communication interface is configured to send a first configuration to a terminal, the first configuration is used for configuring a dedicated bearer for information transmission, and the dedicated bearer is independent of an SRB and a DRB; and a receiving module, configured to receive information from the terminal through the dedicated bearer.

In a fourteenth aspect, a radio access network device is provided, including a processor and a communication interface, where the communication interface is configured to receive capability information that is reported by a terminal and that is of a dedicated bearer of the terminal; where the dedicated bearer is a dedicated bearer for information transmission, and the dedicated bearer is independent of an SRB and a DRB.

In a fifteenth aspect, a core network function is provided, and the core network function includes a processor and a memory. The memory stores a program or an instruction capable of running on the processor, and when the program or instruction is executed by the processor, the steps of the information transmission method on the core network function side provided in the embodiments of this application are implemented.

In a sixteenth aspect, a core network function is provided, including a processor and a communication interface. The communication interface is configured to send a trigger message for triggering information transmission to a radio access network device; and receive information from the radio access network device or a control node; where the information is information transmitted by a terminal through a dedicated bearer; or the information is information generated based on information transmitted by a terminal through a dedicated bearer; where the dedicated bearer is a dedicated bearer for information transmission, and the dedicated bearer is independent of a signaling radio bearer SRB and a data radio bearer DRB.

In a seventeenth aspect, a readable storage medium is provided, where the readable storage medium stores a program or instruction, and when the program or instruction is executed by a processor, the steps of the information transmission method on the terminal side provided in the embodiments of this application are implemented, or the steps of the information transmission method on the radio access network device side provided in the embodiments of this application are implemented, or the steps of the information transmission method on the core network function side provided in the embodiments of this application are implemented, or the steps of the capability information reporting method provided in the embodiments of this application are implemented, or the steps of the capability information receiving method provided in the embodiments of this application are implemented.

In an eighteenth aspect, a wireless communication system is provided, including: a terminal, a radio access network device, and a core network function. The terminal can be configured to perform the steps of the information transmission method on the terminal side provided in the embodiments of this application, the radio access network device can be configured to perform the steps of the information transmission method on the radio access network device side provided in the embodiments of this application, and the core network function can be configured to perform the steps of the information transmission method on the core network function side provided in the embodiments of this application.

In a nineteenth aspect, a wireless communication system is provided, including: a terminal and a radio access network device. The terminal can be configured to perform the steps of the information transmission method on the terminal side provided in the embodiments of this application, or the terminal can be configured to perform the steps of the capability information reporting method provided in the embodiments of this application, and the radio access network device can be configured to perform the steps of the information transmission method on the radio access network device side provided in the embodiments of this application, or the radio access network device can be configured to perform the steps of the capability information receiving method provided in the embodiments of this application.

In a twentieth aspect, a chip is provided, and the chip includes a processor and a communication interface. The communication interface and the processor are coupled, and the processor is configured to run a program or instructions to implement the information transmission method on the terminal side provided in the embodiments of this application, or implement the information transmission method on the radio access network device side provided in the embodiments of this application, or implement the information transmission method on the core network function side provided in the embodiments of this application, or implement the capability information reporting method on the core network function side provided in the embodiments of this application, or implement the capability information receiving method provided in the embodiments of this application.

In a twenty-first aspect, a computer program/program product is provided. The computer program/program product is stored in a storage medium. The program/program product is executed by at least one processor to implement the steps of the information transmission method on the terminal side provided in the embodiments of this application, or the program/program product is executed by at least one processor to implement the steps of the information transmission method on the radio access network device side provided in the embodiments of this application, or the program/program product is executed by at least one processor to implement the steps of the information transmission method on the core network function side provided in the embodiments of this application, or the program/program product is executed by at least one processor to implement the steps of the capability information reporting method provided in the embodiments of this application, or the program/program product is executed by at least one processor to implement the steps of the capability information receiving method provided in the embodiments of this application.

In the embodiments of this application, the terminal obtains the first configuration, where the first configuration is used for configuring the dedicated bearer for information transmission, and the dedicated bearer is independent of an SRB and a DRB; and the terminal transmits the information through the dedicated bearer. In this way, the terminal can transmit the information through the dedicated bearer other than an SRB and a DRB, thereby improving the transmission performance of the terminal.

### BRIEF DESCRIPTION OF DRAWINGS

FIG. 1 is a block diagram of a wireless communication system to which embodiments of this application can be applied;
FIG. 2 is a flowchart of an information transmission method provided in the embodiments of this application;
FIG. 3 is a flowchart of a capability information reporting method provided in the embodiments of this application;
FIG. 4 is a flowchart of another information transmission method provided in the embodiments of this application;
FIG. 5 is a flowchart of a capability information receiving method provided in the embodiments of this application;
FIG. 6 is a flowchart of another information transmission method provided in the embodiments of this application;
FIG. 7 to FIG. 9 are schematic diagrams of protocol layer architectures provided in the embodiments of this application;
FIG. 10 is a structural diagram of an information transmission apparatus provided in the embodiments of this application;
FIG. 11 is a structural diagram of a capability information reporting apparatus provided in the embodiments of this application;
FIG. 12 is a structural diagram of another information transmission apparatus provided in the embodiments of this application;
FIG. 13 is a structural diagram of a capability information receiving apparatus provided in the embodiments of this application;
FIG. 14 is a structural diagram of another information transmission apparatus provided in the embodiments of this application;
FIG. 15 is a structural diagram of a communication device provided in the embodiments of this application;
FIG. 16 is a structural diagram of a device provided in the embodiments of this application;
FIG. 17 is a structural diagram of a radio access network device provided in the embodiments of this application; and
FIG. 18 is a structural diagram of another network-side device provided in the embodiments of this application.

### DETAILED DESCRIPTION OF EMBODIMENTS

The technical solutions in the embodiments of this application will be clearly described below in conjunction with the accompanying drawings in the embodiments of this application. Obviously, the described embodiments are some not all of the embodiments of this application. All other embodiments obtained by those of ordinary skill in the art based on the embodiments in this application belong to the protection scope of this application.

The terms "first", "second", and the like in this application are used to distinguish between similar objects and are not used to describe a specific order or sequence. It should be understood that the terms used in this way can be interchanged as appropriate, so that the embodiments of this application can be implemented in sequences other than those illustrated or described herein, and the objects distinguished by "first" and "second" are usually of one type, and the number of objects is not limited. For example, the first object may be one or more. In addition, "or" in this application indicates at least one of the connected objects. For example, "A or B" covers three scenarios. Scenario one: including A but not including B; scenario two: including B but not including A; scenario three: including both A and B. The character "/" generally indicates that the preceding and following associated objects are in an "or" relationship.

The term "indication" in this application can be either a direct indication (or explicit indication) or an indirect indication (or implicit indication). The direct indication can be understood as follows: a sender explicitly informs a receiver of specific information, an operation to be executed, a request result, or the like in a sent indication. The indirect indication can be understood as follows: a receiver determines corresponding information or performs judgment according to an indication sent by a sender, and determines an operation to be executed, a request result, or the like according to the judgment result.

It is worth pointing out that the technology described in the embodiments of this application is not limited to long term evolution (Long Term Evolution, LTE)/LTE-advanced (LTE-Advanced, LTE-A) systems, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the described technology can be used not only in the above-mentioned systems and radio technologies, but also in other systems and radio technologies. The following description describes a new radio (New Radio, NR) system for exemplary purposes, and NR terminology is used in most of the following descriptions, but these technologies can also be applied to systems other than the NR system, such as the 6^{th} generation (6^{th} Generation, 6G) communication system.

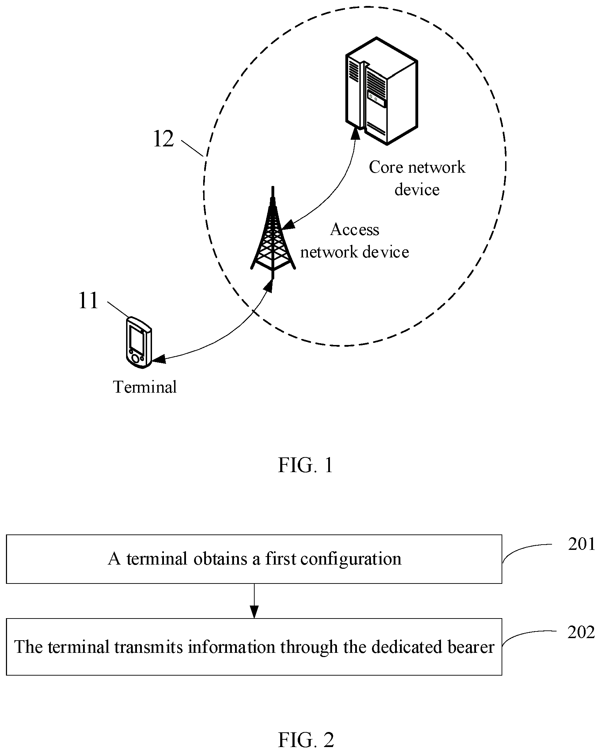

FIG. 1 is a block diagram of a wireless communication system to which embodiments of this application can be applied. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), augmented reality (Augmented Reality, AR), a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), smart home (home devices with wireless communication functions, such as refrigerators, televisions, washing machines, or furniture), a game console, a personal computer (Personal Computer, PC), an automated teller machine, a self-service machine, or other terminal side devices. The wearable device includes a smart watch, a smart bracelet, smart headphones, smart glasses, smart jewelry (a smart bracelet, a smart bangle, a smart ring, a smart necklace, a smart ankle bracelet, a smart anklet, and the like), a smart wristband, smart clothing, and the like. The vehicle user equipment may also be referred to as a vehicle terminal, vehicle controller, vehicle module, vehicle component, vehicle chip, or vehicle unit, or the like. It should be noted that the specific type of the terminal 11 is not limited in the embodiments of this application.

The network-side device 12 may include an access network device or a core network device, where the access network device may also be referred to as a radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved node B (Evolved Node B, eNB), a next generation node N (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or other appropriate terms in the art, as long as the same technical effect is achieved. The base station is not limited to specific technical terminology. It should be noted that in the embodiments of this application, only the base station in the NR system is taken as an example for introduction, but the base station is not limited to a specific type.

The core network device may also be referred to as a core network function, a core network node, a core network function, or the like, which may include but is not limited to at least one of the following: a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is taken as an example for introduction, but the core network device is not limited a specific type.

Below, an information transmission method and apparatus, a terminal, a device, and a core network function provided in the embodiments of this application will be described in detail in combination with the accompanying drawings through some embodiments and their application scenarios.

Refer to FIG. 2. FIG. 2 is a flowchart of an information transmission method provided in the embodiments of this application. As shown in FIG. 2, it includes the following steps:
Step 201: A terminal obtains a first configuration, where the first configuration is used for configuring a dedicated bearer for information transmission, and the dedicated bearer is independent of an SRB and a DRB.

The obtaining a first configuration may be that the terminal receives the first configuration sent by a network-side device, or the terminal generates the first configuration, or the terminal receives the first configuration sent by another terminal.

The information may be information to be sent by the terminal, for example, including but not limited to at least one of the following:
sensing data, artificial intelligence (Artificial Intelligence, AI) data, a measurement result, configuration, link quality, transmission effect, effect of algorithm control, control information, and the like.

The AI data may include an AI model, an AI model parameter, AI model training data, or the like.

In some embodiments, the information may be information that needs to be collected by the network-side device. For example, the network side collects at least one of the following through the configuration of the dedicated bearer:
sensing data, AI data, a measurement result, configuration, link quality, transmission effect, effect of algorithm control, and the like.

In the embodiments of this application, for the information collection scenario, the dedicated bearer may be referred to as a collection radio bearer (Collection Radio Bearer, CRB). The embodiments of this application do not limit the name of the dedicated bearer.

It should be noted that in the embodiments of this application, the information is not limited to information that needs to be collected by the network side. For example, it may alternatively be information actively sent by the terminal, or information sent by the network side to the terminal, or information to be sent in other cases, which is not limited.

In the embodiments of this application, the information may alternatively be data information.

The dedicated bearer for information transmission can be understood as follows: the dedicated bearer is a bearer dedicated to transmitting the information.

That the dedicated bearer is independent of an SRB and a DRB can be understood as follows: the dedicated bearer is neither an SRB nor a DRB, but a newly defined bearer in the embodiments of this application.

Step 202: The terminal transmits information through the dedicated bearer.

That the terminal transmitting information through the dedicated bearer may be that the terminal sends the information to the network side through the dedicated bearer.

In the embodiments of this application, it can be achieved that the terminal can transmit information through a dedicated bearer other than an SRB and a DRB, thereby improving the transmission performance of the terminal.

As an optional embodiment, the dedicated bearer is used for at least one of the following:
information interaction between the terminal and a radio access network device; and
information interaction between the terminal and a core network function.

That the dedicated bearer is used for information interaction between the terminal and a radio access network device can be understood as follows: the terminal transmits the information to the radio access network through the dedicated bearer. For example, two end-to-end entities of the dedicated bearer are respectively located at the radio access network and the terminal. For example, in a data collection scenario, if the data collection function is triggered by the radio access network device itself, or is triggered by another radio access network node, or is triggered by operations, administration, and maintenance (Operations, Administration, and Maintenance, OAM), or is triggered by a core network (Core Network, CN) node, the radio access network device establishes a dedicated bearer, where the bearer is used for transmitting data collection related configuration between the radio access network device and the terminal and reported data. End-to-end entities of the bearer are respectively located at the radio access network device and the terminal. Transmission between the radio access network device and other nodes adopts a dedicated data pipeline, where the pipeline is a pipeline between nodes.

That the dedicated bearer is used for information interaction between the terminal and a core network function can be understood as follows: the terminal transmits information to the core network function through the dedicated bearer, where the transmission of the information is transparent to the radio access network device. For example, if the radio access network device is triggered by a core network node to perform terminal information transmission that is transparent to the radio access network device, the radio access network device establishes a dedicated bearer, where the bearer is used for passing data collection related configuration for the core network function between the radio access network device and the terminal and reported data. End-to-end entities of the bearer can be respectively located at the core network function and the terminal. Transmission between the radio access network device and other nodes adopts a dedicated data pipeline established for each terminal.

In the above embodiment, information transmission between the terminal and the radio access network device or core network function can be achieved through the dedicated bearer, to further improve the transmission performance of the terminal.

In some embodiments, the information interaction between the terminal and the radio access network function and the information interaction between the terminal and the core network function can be performed using the same dedicated bearer or different dedicated bearers, which are distinguished by bearer identity or data packet format.

As an optional embodiment, the first configuration includes at least one of the following:
an identity of the dedicated bearer, attribute information of the dedicated bearer, routing-related information of the dedicated bearer, processing information of the dedicated bearer during a handover process, and a mapping of the dedicated bearer.

The identity of the dedicated bearer is used to indicate the dedicated bearer. For example, the identity is used to indicate the terminal to create or use the dedicated bearer.

The attribute information of the dedicated bearer is used to represent at least one attribute of the dedicated bearer.

In some embodiments, the attribute information of the dedicated bearer includes at least one of the following:
attribute information of at least one protocol layer corresponding to the dedicated bearer, transmission configuration information of the dedicated bearer, security attribute information of the dedicated bearer, segment attribute information of the dedicated bearer, and a bearer type of the dedicated bearer.

The at least one protocol layer corresponding to the dedicated bearer may be at least one protocol layer included in a protocol stack corresponding to the dedicated bearer.

The attribute information of the protocol layer may include a configuration of the protocol layer, such as a packet data convergence protocol (Packet Data Convergence Protocol, PDCP) layer configuration, a radio link control (Radio Link Control, RLC) layer configuration corresponding to CRB, a medium access control (Medium Access Control, MAC) layer configuration, or the like. Protocol layers can be flexibly configured through the attribute information.

The transmission configuration information of the dedicated bearer may include at least one of the following:
a transmission mode of the dedicated bearer, a maximum data length of the dedicated bearer, reordering information of the dedicated bearer, a delivery mode of the dedicated bearer, a logical channel identity of the dedicated bearer, a logical channel priority of the dedicated bearer, and a guaranteed bit rate of the dedicated bearer.

The transmission mode of the dedicated bearer may include at least one of the following: an RLC transmission mode, and a dual active protocol stack (Dual Active Protocol Stack, DAPS) transmission mode.

The RLC transmission mode may include a transparent mode (Transparent Mode, TM), an acknowledged mode (Acknowledged Mode, AM), or an unacknowledged mode (Unacknowledged Mode, UM).

The RLC transmission mode or DAPS transmission mode can enable the dedicated bearer to support more flexible transmission.

The maximum data length of the dedicated bearer can be flexibly configured to support more flexible transmission.

The reordering information of the dedicated bearer may be reordering timing (T-reordering) information, or other reordering information, which is not limited. In this way, the reordering of the dedicated bearer can be flexibly configured to support more flexible transmission.

The delivery mode of the dedicated bearer may be whether to deliver in order, to support more flexible transmission.

The logical channel identity of the dedicated bearer, logical channel priority of the dedicated bearer, or guaranteed bit rate of the dedicated bearer can achieve flexible configuration of the logical channel identity of the dedicated bearer, logical channel priority of the dedicated bearer, or guaranteed bit rate of the dedicated bearer, to support more flexible transmission.

The bearer type of the dedicated bearer may include: split bearer (split bearer). The bearer can perform selective path transmission through a master cell group (Master Cell Group, MCG) and a secondary cell group (Secondary Cell Group, SCG), or perform carrier aggregation (Carrier Aggregation, CA) duplication (duplication) or dual connectivity (Dual Connectivity, DC) duplication, to support more flexible transmission.

In some embodiments, the bearer type of the dedicated bearer may include non-split bearer.

The security attribute information of the dedicated bearer may indicate whether to enable integrity protection function or whether to enable encryption and decryption, and the like, to support more flexible transmission.

The segment attribute information of the dedicated bearer may be additional segment information of the dedicated bearer, such as a sequence number (Sequence Number, SN) length, a maximum number of segments, a segment indication field length, or a tail segment marker. This can support more flexible segment transmission.

The attribute information of the dedicated bearer may alternatively include bearer format information, such as a maximum packet size, a length indicator (Length Indicator) size, or a segment offset (Segment offset) size.

The mapping of the dedicated bearer includes at least one of the following:
a mapping between the dedicated bearer and a protocol entity; and
a mapping between the dedicated bearer and data of a protocol entity.

The mapping between the dedicated bearer and the protocol entity may include at least one of the following:
a mapping between the dedicated bearer and a service data adaptation protocol Uu interface (Service Data Adaptation Protocol for Uu interface, DSAP-Uu) entity; and
a mapping between the dedicated bearer and a service data adaptation protocol core network (Service Data Adaptation Protocol for Core Network, DSAP-CN) entity.

The mapping between the dedicated bearer and the data of the protocol entity may include at least one of the following:
a mapping between the dedicated bearer and at least one type of data in the DSAP-Uu entity; and
a mapping between the dedicated bearer and at least one type of data in the DSAP-CN entity.

In addition, the data may be application data. Therefore, the mapping between the dedicated bearer and the data of the protocol entity may include a mapping between the dedicated bearer and application data of the protocol entity.

Data transmitted through the dedicated bearer can be flexibly configured through the mapping of the dedicated bearer, to further improve the transmission flexibility of the dedicated bearer.

The routing-related information of the dedicated bearer can explicitly or implicitly indicate routing of the dedicated bearer. For example, the routing-related information of the dedicated bearer may include:
routing information of the dedicated bearer; or
packet format information, where the packet format information is used for determining routing information of a packet over the dedicated bearer.

The routing information of the dedicated bearer may indicate destination routing of the information, for example, making the information (such as data collection content) terminate at the radio access network device or terminate at a protocol layer of the core network. For example, routing attribute of information of dedicated bearer 1 is to DSAP-Uu of gNB, and routing attribute of data of dedicated bearer 2 is to DSAP-CN of the core network. The routing information of the dedicated bearer may alternatively be a bearer identity, and the bearer identity indicates routing of the dedicated bearer to different nodes.

That the packet format information is used for determining routing information of a packet over the dedicated bearer can be understood as follows: the packet format information indicates routing information corresponding to different packet formats, so that specific information carried by the packet can indicate the routing information of the packet over the dedicated bearer, that is, the routing information is carried with the packet. For example, in a field in a packet header (Packet header), 0 represents the DSAP-Uu of the radio access network, and 1 represents the DSAP-CN of the core network.

Routing of the dedicated bearer can be flexibly configured through the routing information or packet format information of the dedicated bearer, to improve the flexibility of data transmission.

The processing information of the dedicated bearer during the handover process can indicate a processing manner of the dedicated bearer during the cell handover process, such as whether service continuity is needed during handover, whether a buffer is cleared, whether a transmission state variable is reset, or the like. The processing information of the dedicated bearer during the handover process can support flexible information transmission through the dedicated bearer during the handover process.

It should be noted that in some embodiments, part of the content in the identity of the dedicated bearer, the attribute information of the dedicated bearer, the routing-related information of the dedicated bearer, the processing information of the dedicated bearer during the handover process, and the mapping of the dedicated bearer may alternatively be agreed through protocol, to reduce overheads of the first configuration.

As an optional embodiment, the first configuration is carried in a configuration message, where
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

The configuration message may be a radio resource control (Radio Resource Control, RRC) configuration or reconfiguration message.

The configuration information field dedicated to the dedicated bearer can be understood as follows: the information field is used for configuring only the dedicated bearer, which is different from information fields of an SRB and a DRB. For example, in a configuration message, an SRB and a DRB each already have their own add/modify and release fields (such as srb-ToAddModList, srb3-ToRelease, drb-ToAddModList, or drb-ToReleaseList), with an independent information field in the configuration message. In this way, the independent information field allows the dedicated bearer configuration to be more flexible.

That the second information field is a configuration information field for multiple types of bearers may be as follows: the second information field is used for configuring the dedicated bearer, and also used for configuring at least one of an SRB or a DRB. For example, the second information field is an additional configuration field for the dedicated bearer added in bearer configuration fields of the configuration message that has been defined in a protocol, and the configuration of the dedicated bearer is combined into the configuration of one type of the bearers, to reduce the complexity of the configuration message.

As an optional embodiment, the dedicated bearer has at least one of the following characteristics:
the dedicated bearer is capable of being present with an SRB and a DRB;
parallel transmission is capable of being performed over the dedicated bearer, an SRB, and a DRB;
the dedicated bearer is capable of being present with an SRB;
parallel transmission is capable of being performed over the dedicated bearer and an SRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service (Quality of Service, QoS); and
the dedicated bearer supports cell handover.

That the dedicated bearer is capable of being present with an SRB and a DRB can be understood as follows: the terminal can perform transmission over all of these three bearers.

That the dedicated bearer parallel transmission is capable of being performed over the SRB and DRB can be understood as follows: the terminal can perform parallel transmission of these three bearers.

That the dedicated bearer is capable of being present with an SRB can be understood as follows: the terminal can perform transmission over these two bearers.

That parallel transmission is capable of being performed over the dedicated bearer and an SRB can be understood as follows: the terminal can perform parallel transmission over these two bearers.

The target condition may be a condition agreed in a protocol or configured by the network side. For example, the dedicated bearer is established after successful RRC connection establishment, after Uu interface security activation, or after obtaining a terminal related capability.

That an identity of the dedicated bearer is arranged together with an identity of an SRB or a DRB means that the dedicated bearer shares an identity (Identity, ID) space with the SRB or DRB. For example, if the DRB ID space is extended to a maximum of 64, the DRB can share this 64 ID space with the dedicated bearer. That an identity of the dedicated bearer is arranged independently means that the dedicated bearer has an independent ID space. For example, an ID space of 1 to 32 is specifically specified for the dedicated bearer, or the like. In this way, the identity of the dedicated bearer can be flexibly configured to improve the flexibility of the dedicated bearer.

That an attribute of the dedicated bearer is configurable means that the attribute of the dedicated bearer can be dynamically or flexibly configured. Specifically, the attribute of the dedicated bearer is dynamically or flexibly configured through the first configuration or other configuration information, to support more flexible transmission.

In some embodiments, the attribute of the dedicated bearer includes at least one of the following:
a transmission configuration of the dedicated bearer, a security attribute of the dedicated bearer, and a segment attribute of the dedicated bearer.

For the transmission configuration, security attribute, and segment attribute, reference is made to the attribute information of the dedicated bearer configured through the first configuration, which will not be repeated here.

In this embodiment, the attribute of the dedicated bearer can be configurable, to support more flexible transmission.

That the dedicated bearer corresponds to at least one QoS means that the dedicated bearer can transmit a data flow with one or more QoS attributes. For example, the dedicated bearer has different QoS attributes. On the same dedicated bearer, multiple data collection data flows may be multiplexed, and if the flows have different QoS attributes, additional layers can be explicitly carried for distinguishing different data flow attributes.

That the dedicated bearer supports cell handover may be that during a cell handover process, buffer clearing and transmission variable resetting, buffer retaining and transmission variable resetting, buffer retaining and transmission variable retaining, or the like can be flexibly configured for the dedicated bearer.

Since the dedicated bearer has at least one of the above characteristics, in a case that the terminal performs information transmission through the dedicated bearer, the flexibility is higher, and the continuity requirement, transmission efficiency, and other transmission requirements can all be met.

As an optional embodiment, the dedicated bearer is used for transmitting information about at least one of the following protocol entities:
a DSAP-CN entity; and
a DSAP-Uu entity.

The DSAP-Uu entity is used for transmitting information between the terminal and the radio access network device, and the DSAP-CN entity is used for transmitting information between the terminal and the core network function.

The DSAP-CN entity or DSAP-Uu entity can allow the terminal to perform flexible information transmission with the network side.

As an optional embodiment, the method further includes:
receiving, by the terminal, a second configuration issued by a network-side device, where the second configuration is used for reconfiguring the dedicated bearer.

The reconfiguring may be reconfiguring the dedicated bearer in a cell handover scenario, or reconfiguring the dedicated bearer for the terminal in a case that a serving cell is not changed, but the network-side device performs so out of a demand change, its own algorithm needs, or the like.

In this embodiment, since the second configuration is used for reconfiguring the dedicated bearer, the dedicated bearer can better meet the transmission requirements.

Optionally, in a case that the configuration changed by the second configuration does not affect layer 2, a state variable of a PDCP entity and a state variable of an RLC entity that are corresponding to the dedicated bearer are maintained; or
in a case that a configuration changed by the second configuration has no explicit reset or no explicit reconstruction indication, a state variable of a packet data convergence protocol PDCP entity and a state variable of a radio link control RLC entity that are corresponding to the dedicated bearer are maintained; or
in a case that a configuration changed by the second configuration affects layer 2, the terminal reconstructs or resets at least one of a PDCP entity and an RLC entity that are corresponding to the dedicated bearer; or
in a case that a configuration changed by the second configuration carries an explicit reset or reconstruction indication, the terminal reconstructs or resets at least one of a PDCP entity and an RLC entity that are corresponding to the dedicated bearer.

The layer 2 includes protocol layers other than an L1 PHY layer of the protocol stack, such as a MAC layer, an RLC layer, a PDCP layer, and an SDAP layer.

The not affecting layer 2 may be that changing the configuration of the dedicated bearer does not affect layer 2. For example, for processing at the PDCP layer or RLC layer, no operations can be performed at the PDCP layer and RLC layer.

The state variable of the PDCP entity and the state variable of the RLC entity being maintained means that for the second configuration, the PDCP entity and RLC entity can perform no operations, so that the state variables are maintained, thereby achieving continuous transmission to improve transmission performance.

Reconstructing or resetting at least one of the PDCP entity and RLC entity can achieve more flexible processing of the PDCP entity and RLC entity.

In some embodiments, for the PDCP entity, in a case that a configuration changed by the second configuration carries an explicit reset or reconstruction indication or affects layer 2, reconstruction can be performed, the RLC transmission mode is distinguished, an AM state variable is maintained, a UM state variable is reset, and a service data unit (Service Data Unit, SDU) in a buffer can continue to be retained, allowing for continuous reception and sending according to a new security key after reconfiguration, thereby ensuring service continuity to a certain extent.

One embodiment is as follows:
A serving cell of the terminal is not changed, and a base station side reconfigures the dedicated bearer for the user equipment (User Equipment, UE) out of a demand change, its own algorithm need, or the like, with the purpose of changing some configurations. In a case that a changed configuration does not affect layer 2, for example, in a case of PDCP or RLC processing, no operations can be performed at PDCP and RLC, and the state variables are maintained, so that the data over the terminal dedicated bearer continues to be received and sent continuously, with the service continuity being not affected at all. In a case that the configuration change affects layer 2 data processing, for example, in a case that it is necessary to update a security key, a reconstruction or reset processing may be performed on the PDCP entity or RLC entity. In this case, for the RLC layer, since data that has not been sent or has not been successfully sent in a buffer are all under an old security key, which cannot allow for further operation, operations of resetting a transmission variable and clearing a buffer are generally performed at the RLC layer. For the PDCP layer, reconstruction can be performed in this case, the RLC transmission mode is distinguished, an AM state variable is maintained, a UM state variable is reset, and an SDU in a buffer can continue to be retained, allowing for continuous reception and sending according to the new security key after reconfiguration, thereby ensuring service continuity to a certain extent.

Optionally, in a case of cell handover, the second configuration is used for configuring at least one of the following:
reset of an RLC entity corresponding to the dedicated bearer of the terminal; and
handover processing of a PDCP entity corresponding to the dedicated bearer of the terminal, where the handover processing includes at least one of the following:
   clearing a buffer and resetting a transmission variable;
   retaining a buffer and resetting a transmission variable; and
   retaining a buffer and a transmission variable.

Resetting the RLC entity that are corresponding to the dedicated bearer of the terminal can allow for establishment of a new RLC entity for the dedicated bearer on the target side without passing the RLC state between the source cell and the target cell, so as to support cell handover.

In the handover processing of the PDCP entity, the buffer can be retained or cleared, and the transmission variable can be retained or reset, thereby achieving continuous data transmission during the cell handover process to improve transmission performance.

In some embodiments, whether to delete data over the dedicated bearer may further be configured. For example, the data is not deleted if it is valid in a target cell, and is deleted if it is invalid in the target cell, to further improve the transmission performance of the dedicated bearer.

One embodiment is as follows:
For the handover scenario, a target cell generally provides a new configuration for the dedicated bearer, and a source cell sends it to the terminal in a handover command for the terminal to use after the terminal has accessed the target cell. The target cell can configure RLC reset and PDCP reconstruction for the dedicated bearer, and optionally can configure whether to delete data over the dedicated bearer. The RLC reset is because an RLC status is generally not passed between a source cell and a target cell, and a new RLC entity is established for the dedicated bearer on the target side. In PDCP reconstruction, for a UM PDCP entity, a state variable is cleared, and for an AM PDCP entity, a state variable is maintained. The purpose of this is to better ensure service continuity in AM mode. The deletion option for the dedicated bearer data is mainly to discriminate the validity of the data. For example, if the dedicated bearer data in the source cell is no longer valid in the target cell, it can be deleted, and if it remains valid, it can be retained. The most typical data that needs to be retained is data to be sent to a core network node, because its validity will not be affected by a change in the serving base station.

As an optional embodiment, the method further includes:
reporting, by the terminal, capability information of the dedicated bearer.

The capability information of the dedicated bearer can be whether the terminal supports the dedicated bearer, or a specific capability of the dedicated bearer.

In some embodiments, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

The at least one capability of the supported dedicated bearer means that the dedicated bearer has multiple capabilities. The capability information indicates the specific capability supported by the terminal, such as supporting interaction between the terminal and a radio access network device, interaction between the terminal and a core network function, transmitting multiple QoS data flows, or other capabilities.

The information collection refers to, in a case that the dedicated bearer is used for information collection, whether the terminal supports information collection, that is, transmitting relevant information to the network side.

The supported at least one function of information collection can mean reporting of specific information in information collection supported by the terminal. For example, if information collection involves multiple types of information, the terminal supports at least one of these multiple types of information.

The capability range of at least one protocol layer refers to different capability ranges for different protocol layers, such as supporting at least one capability among header compression and decompression, security operation, split bearer routing and duplication, and the like for the PDCP layer, and supporting at least one mode among TM, UM, and AM modes for the RLC layer.

The capability information can allow the network side to learn about a corresponding capability of the terminal, so as to configure the terminal with a dedicated bearer that matches the capability of the terminal, making the transmission of the dedicated bearer more reliable.

In the embodiments of this application, the terminal obtains the first configuration, where the first configuration is used for configuring the dedicated bearer for information transmission, and the dedicated bearer is independent of an SRB and a DRB; and the terminal transmits the information through the dedicated bearer. This can allow the terminal to transmit the information through the dedicated bearer other than the SRB and DRB, thereby improving the transmission performance of the terminal.

In the embodiments of this application, the dedicated bearer is configured for the terminal, and used for transmitting signaling, data, model information, and the like related to data collection. The bearer identity or packet format is used to solve routing to different nodes, and different handover processing is performed based on bearer characteristics to meet the continuity requirements and transmission efficiency.

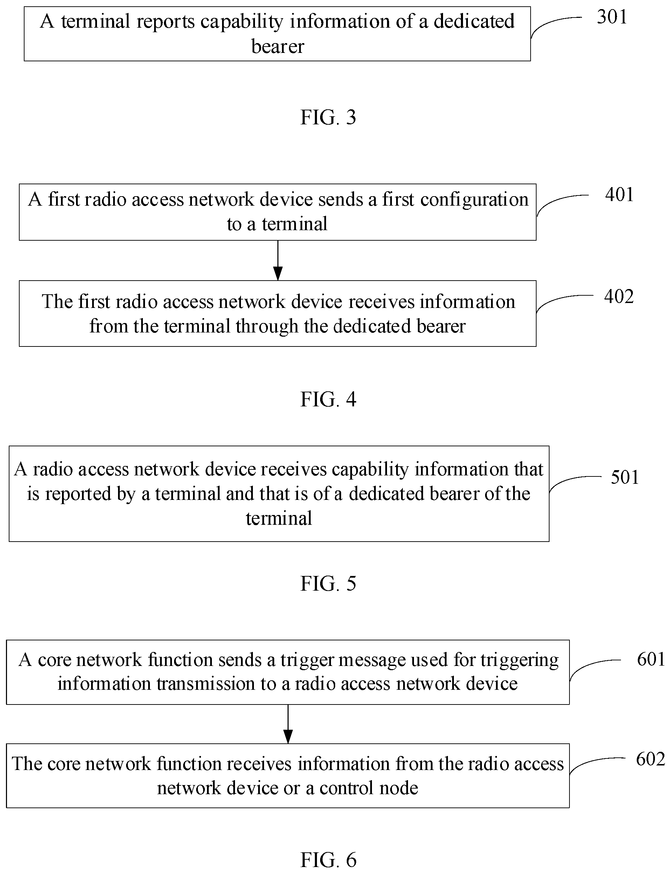

Refer to FIG. 3. FIG. 3 is a flowchart of a capability information reporting method provided in the embodiments of this application. As shown in FIG. 3, it includes the following step:
Step 301: The terminal reports capability information of a dedicated bearer.

The dedicated bearer is a dedicated bearer for information transmission, and the dedicated bearer is independent of an SRB and a DRB.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

In this embodiment, since the terminal reports the capability information of the dedicated bearer, this can allow, in a case that the terminal supports the dedicated bearer, the terminal to perform information transmission through the dedicated bearer, thereby improving the flexibility of data transmission processing.

It should be noted that this embodiment is an implementation of terminal capability reporting corresponding to the embodiment shown in FIG. 2, and for a specific implementation of this embodiment, reference may be made to the relevant description of the embodiment shown in FIG. 2. To avoid repetition, details are not provided again in this embodiment.

Refer to FIG. 4. FIG. 4 is a flowchart of another information transmission method provided in the embodiments of this application. As shown in FIG. 4, it includes the following steps:
Step 401: A first radio access network device sends a first configuration to a terminal, where the first configuration is used for configuring a dedicated bearer for information transmission, and the dedicated bearer is independent of a signaling radio bearer SRB and a data radio bearer DRB.
Step 402: The first radio access network device receives information from the terminal through the dedicated bearer.

Optionally, the dedicated bearer is used for at least one of the following:
information interaction between the terminal and a second radio access network device; and
information interaction between the terminal and a core network function.

The first radio access network device and the second radio access network device may be the same or different.

Optionally, the first configuration includes at least one of the following:
an identity of the dedicated bearer, attribute information of the dedicated bearer, routing-related information of the dedicated bearer, processing information of the dedicated bearer during a handover process, and a mapping of the dedicated bearer.

Optionally, the attribute information of the dedicated bearer includes at least one of the following:
attribute information of at least one protocol layer corresponding to the dedicated bearer, transmission configuration information of the dedicated bearer, security attribute information of the dedicated bearer, segment attribute information of the dedicated bearer, and a bearer type of the dedicated bearer.

Optionally, the transmission configuration information of the dedicated bearer includes at least one of the following:
a transmission mode of the dedicated bearer, a maximum data length of the dedicated bearer, reordering timing information of the dedicated bearer, a delivery mode of the dedicated bearer, a logical channel identity of the dedicated bearer, a logical channel priority of the dedicated bearer, and a guaranteed bit rate of the dedicated bearer.

Optionally, the bearer type of the dedicated bearer includes: split bearer; or
the transmission mode of the dedicated bearer includes at least one of the following: a radio link control RLC transmission mode, and a dual active protocol stack DAPS transmission mode.

Optionally, the mapping of the dedicated bearer includes at least one of the following:
a mapping between the dedicated bearer and a protocol entity; and
a mapping between the dedicated bearer and data of a protocol entity.

Optionally, the routing-related information of the dedicated bearer includes:
routing information of the dedicated bearer; or
packet format information, where the packet format information is used for determining routing information of a packet over the dedicated bearer.

Optionally, the first configuration is carried in a configuration message, where
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

Optionally, the dedicated bearer has at least one of the following characteristics:
the dedicated bearer is capable of being present with a signaling radio bearer SRB and a data radio bearer DRB;
parallel transmission is capable of being performed over the dedicated bearer, an SRB, and a DRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service QoS; and
the dedicated bearer supports cell handover.

Optionally, the attribute of the dedicated bearer includes at least one of the following:
a transmission configuration of the dedicated bearer, a security attribute of the dedicated bearer, and a segment attribute of the dedicated bearer.

Optionally, the dedicated bearer is used for transmitting information about at least one of the following protocol entities:
a service data adaptation protocol DSAP-Uu entity;
a service data adaptation protocol for Ng interface (Service Data Adaptation Protocol for Ng interface, DSAP-Ng) entity, where the DSAP-Ng entity is used for interaction between the first radio access network device and a core network function; and
a service data adaptation protocol for Xn interface (Service Data Adaptation Protocol for Xn interface, DSAP-Xn) entity, where the DSAP-Xn entity is used for interaction between the first radio access network device and another radio access network device.

Optionally, the method further includes:
sending, by the first radio access network device, a second configuration to the terminal, where the second configuration is used for reconfiguring the dedicated bearer.

Optionally, in a case that a configuration changed by the second configuration does not affect layer 2, a state variable of a packet data convergence protocol PDCP entity and a state variable of a radio link control RLC entity that are corresponding to the dedicated bearer are maintained; or
in a case that a configuration changed by the second configuration has no explicit reset or no explicit reconstruction indication, a state variable of a packet data convergence protocol PDCP entity and a state variable of a radio link control RLC entity that are corresponding to the dedicated bearer are maintained; or
in a case that a configuration changed by the second configuration affects layer 2, the first radio access network device reconstructs or resets at least one of a PDCP entity and an RLC entity that are corresponding to the dedicated bearer; or
in a case that a configuration changed by the second configuration carries an explicit reset or reconstruction indication, the first radio access network device reconstructs or resets at least one of a PDCP entity and an RLC entity that are corresponding to the dedicated bearer.

Optionally, in a case of cell handover, the second configuration is used for configuring at least one of the following:
reset of an RLC entity corresponding to the dedicated bearer of the terminal; and
handover processing of a PDCP entity corresponding to the dedicated bearer of the terminal, where the handover processing includes at least one of the following:
   clearing a buffer and resetting a transmission variable;
   retaining a buffer and resetting a transmission variable; and
   retaining a buffer and a transmission variable.

Optionally, the method further includes:
receiving, by the first radio access network device, capability information that is reported by the terminal and that is of the dedicated bearer of the terminal.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

Optionally, the sending, by a first radio access network device, a first configuration to a terminal includes at least one of the following:
in a case that the first radio access network device triggers information transmission, sending, by the first radio access network device, the first configuration to the terminal;
in a case that the first radio access network device receives a first trigger message sent by a core network for triggering information transmission, sending, by the first radio access network device, the first configuration to the terminal; and
in a case that the first radio access network device receives a second trigger message sent by another radio access network device for triggering information transmission, sending, by the first radio access network device, the first configuration to the terminal.

The triggering can be triggered based on a demand of the radio access network device, the core network, or another radio access network device.

In this embodiment, multiple manners of triggering the establishment of the dedicated bearer can be supported to better meet the transmission requirements.

Optionally, in a case that the radio access network device receives a first trigger message sent by the core network for triggering information transmission, the method further includes:
transparently transmitting, by the first radio access network device, the information to the core network; or
processing, by the first radio access network device the information for the core network, and sending the processed information to the core network.

The processing can be parsing, modifying, or integrating the information sent by the terminal, so as to report to the core network information that is easier for the core network to identify and process, thereby improving the information transmission effect.

It should be noted that this embodiment is an implementation of the network-side device corresponding to the embodiment shown in FIG. 2, and for a specific implementation of this embodiment, reference may be made to the relevant description of the embodiment shown in FIG. 2. To avoid repetition, details are not provided again in this embodiment.

Refer to FIG. 5. FIG. 5 is a flowchart of a capability information receiving method provided in the embodiments of this application. As shown in FIG. 5, it includes the following step:
Step 501: A radio access network device receives capability information that is reported by a terminal and that is of a dedicated bearer of the terminal.

The dedicated bearer is a dedicated bearer for information transmission, and the dedicated bearer is independent of an SRB and a DRB.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

It should be noted that this embodiment is an implementation of the radio access network device corresponding to the embodiments shown in FIG. 2 and FIG. 3, and for a specific implementation of this embodiment, reference may be made to the relevant descriptions of the embodiments shown in FIG. 2 and FIG. 3. To avoid repetition, details are not provided again in this embodiment.

Refer to FIG. 6. FIG. 6 is a flowchart of another information transmission method provided in the embodiments of this application. As shown in FIG. 6, it includes the following steps:
Step 601: A core network function sends a trigger message used for triggering information transmission to a radio access network device.
Step 602: The core network function receives information from the radio access network device or a control node.

The information is information transmitted by a terminal through a dedicated bearer; or the information is information generated based on information transmitted by a terminal through a dedicated bearer. The dedicated bearer is a dedicated bearer for information transmission, and the dedicated bearer is independent of a signaling radio bearer SRB and a data radio bearer DRB.

The radio access network device can be the first radio access network device or the second radio access network device in the foregoing embodiments.

Optionally, the control node includes:
a control plane control node, or a user plane control node.

The core network function receiving the information sent by the control node can be that the radio access network device transparently transmits the information transmitted by the terminal through the dedicated bearer, in a per UE (per UE) control plane (Control Plane, CP) mode or a per UE user plane (User Plane, UP) mode. In the former mode, the information is transmitted through a per UE signaling pipeline from the radio access network device to a core network control network element. In the latter mode, the information is transmitted through a per UE data pipeline from the radio access network device to a core network user plane network element, and then transmitted to a corresponding server.

Optionally, the core network function receives the information from the control node via a service data adaptation protocol DSAP-core network CN entity; or
the core network function receives, through a DSAP-Ng entity, the information that is sent by the radio access network device and that is processed by the radio access network device.

It should be noted that this embodiment is an implementation of the core network function corresponding to the embodiments shown in FIG. 2 and FIG. 4, and for a specific implementation of this embodiment, reference may be made to the relevant descriptions of the embodiments shown in FIG. 2 and FIG. 4. To avoid repetition, details are not provided again in this embodiment.

Below, a data collection scenario is used as an example. With the dedicated bearer as a CRB, the method provided in the embodiments of this application is described through multiple embodiments:

### Embodiment 1:

This embodiment mainly describes the overall architecture of data collection. In this embodiment, basic architecture and solution descriptions are given for various possible scenarios of data collection to fully demonstrate the feasibility of this application. The following three cases may be included:
Case (1): Data collection is triggered by a base station itself, which is the simplest case. For example, the base station needs to obtain link quality, transmission effects, even algorithm control effects, transmission of AI models/parameters, sensing data, and the like of some Uu interfaces, and therefore needs to go through a process of data collection configuration and result reporting with the UE. This process is directly completed between the base station and the UE, and a protocol layer that processes these data collection configurations and results can be exemplified by a new layer DSAP-Uu.

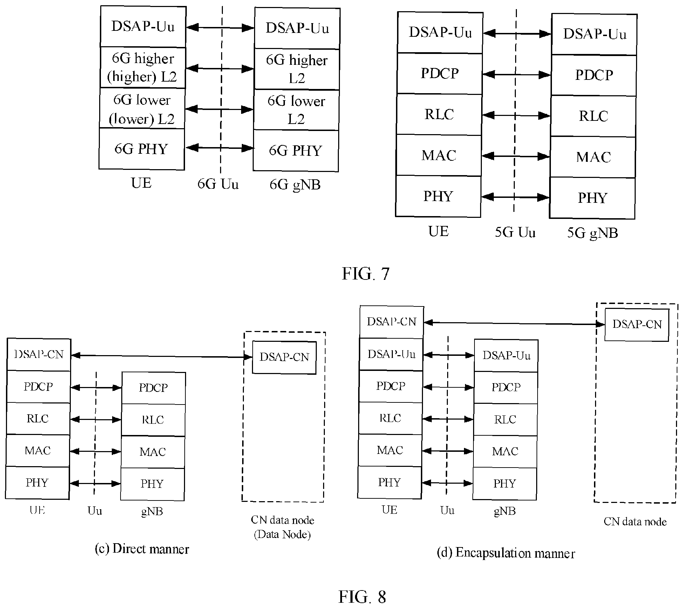

As shown in FIG. 7, (a) is an architectural diagram of DSAP-Uu over the air interface with a possible 6G air interface protocol stack used as an example, while (b) is a transmission architectural diagram of DSAP-Uu over the air interface with a 5G air interface protocol stack used as an example. Certainly, the 6G protocol stack is only an example description, because protocol stack redesign/merging/split may be carried out in 6G, and it is not excluded that the L2 protocol composed of three sublayers PDCP, RLC, and MAC similar to 5G continues to be used in 6G.

The architecture example shown in FIG. 7 can well perform data collection related configuration and result reporting between gNB and UE, and end-to-end communication ends at the base station, with the base station responsible for the data collection process. Certainly, the base station can trigger the data collection and configuration process based on its own needs. A more common situation is that an OAM triggers the base station to perform related data collection. For example, the OAM provides a data collection requirement to the base station, and the base station selects appropriate UE according to an algorithm, makes a data collection configuration for each selected UE, and receives reporting of a data collection result from each selected UE. A one-to-one dedicated bearer protocol stack is used in both the configuration and reporting processes. Certainly, after collecting results from all UEs, the base station can also summarize and even statistically process the UE results, and finally return the statistical results to the OAM.

Case (2): Another type of data collection is directly triggered by a specific node in a core network. For example, if a data collection center in the core network needs to obtain some UE data, it can directly make a data collection configuration for the UE and receive a result. This process is directly end-to-end between the UE and the core network data collection center, with the base station participating in transmission, but merely transparently transmitting without parsing or modifying the data. A protocol layer that processes these data collection configurations and results can be exemplified by a new layer DSAP-CN.

As shown in FIG. 8, in both examples, protocol-defined L2 including three sublayers PDCP/RLC/MAC is used to show the protocol stack, also for ease of description. When 6G develops new L2 protocol stack names and divisions, the sublayers in FIG. 8 can be directly replaced without affecting transmission and implementation effects. The subsequent protocol stack examples are also described with existing sublayers as examples, and can also be replaced by a new 6G protocol stack. (c) is an architectural diagram of a core network protocol stack for direct air interface bearer transmission, while (d) is an architectural diagram of a core network protocol stack where transmission occurs after encapsulation by a corresponding air interface protocol stack. The advantage of (c) is simplicity and directness, with the core network data collection requirements being carried in its own dedicated pipeline, facilitating configuration and control of transmission parameters. Although (d) adds one encapsulation mechanism, which to some extent increases the processing steps of core network data collection, its advantage is multiplexing transmission with data packets of other data collection purposes, thereby facilitating centralized management and control, reducing air interface bearer overheads, and improving efficiency.

The architecture example shown in FIG. 8 can well perform configuration and result reporting related to data collection between a core network data collection node and UE, and end-to-end communication ends at the core network data collection node, with a base station assisting in transmission but being fully transparent throughout, thereby better protecting data and user privacy. The transmission between gNB and the core network data collection node can be carried out in a different manner. For example, gNB first transmits data to a core network control node (for example, like an AMF node in the 5G system) through CP, and then the control node forwards the data to a corresponding data collection center. Alternatively, gNB first transmits data to a core network user plane control node (for example, like a UPF node in the 5G system) through UP; and then the user plane control node forwards the data to a corresponding data collection center, or addresses to a corresponding data collection center in a bus manner within the core network.

Case (3): Another type of data collection is triggered by a specific node in a core network or another RAN node or even a non-3rd generation partnership project (3rd Generation Partnership Project, 3GPP) node. For example, if the data collection center in the core network needs to obtain some data, it can request data from the base station. The base station selects appropriate UE according to an algorithm and performs data collection configuration and result reception through the Uu interface process. After that, the base station processes the UE's data result to form a processed data collection result, and reports it to the core network data collection center. This process is completed hop by hop by the core network data collection center, the base station, and the UE, with the base station participating in a manner of parsing and modifying the requirement and result, rather than merely performing transparent transmission. A protocol layer that processes these data collection configurations and results between the core network data collection center and the base station can be exemplified by a new layer DSAP-NG. Similarly, there can also be a dedicated protocol layer between base stations for processing data collection configurations and results, such as DSAP-Xn. In a case of other third-party or non-3GPP nodes, the protocol layer is implementation-based.

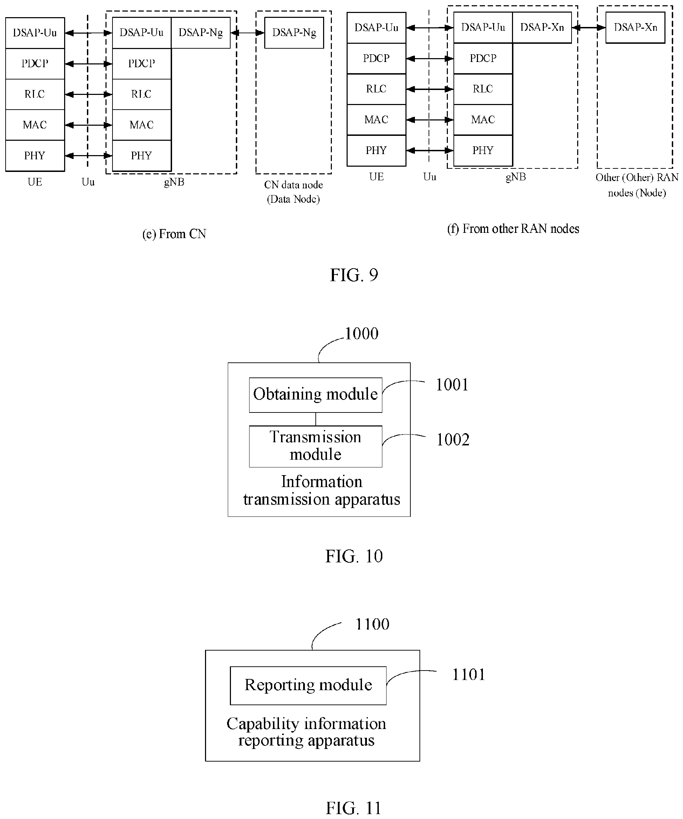

As shown in FIG. 9, the protocol stack example is also described with existing sublayers as examples, and can also be replaced by a new 6G protocol stack. In (e), data collection interaction is performed between a core network node and a base station, and then the base station performs data collection configuration and reporting over a Uu interface, while in (f), data collection interaction is performed between another RAN node and a base station, and then the base station performs data collection configuration and reporting over a Uu interface. Generally, the core network data collection node or another RAN node can first propose data collection requirements to the base station. The base station node converts the requirements into individual data collection configurations for selected UEs and receives their reporting. The base station node then summarizes and processes the reported data from the UEs and feeds back the data to original requirement nodes.

The architecture example shown in FIG. 9 can well perform configuration and result reporting related to data collection, with each layer participating in processing and parsing requirements and data. For example, a requirement node can request sensing data from a base station without specifying any UE. After receiving the requirement, the base station selects appropriate UEs as needed, sends sensing data collection requests to them, collects UE data, processes and handles data of all UE, such as hiding UE identity and privacy information, and reports the statistically processed results to the requirement node. The transmission between gNB and the core network data collection node can be carried out in a different manner. For example, gNB first transmits data to a core network control node (for example, like an AMF node in the 5G system) through a method similar to CP, and then the control node forwards the data to a corresponding data collection center. Alternatively, gNB first transmits data to a core network user plane control node (for example, like a UPF node in the 5G system) through a method similar to UP, and then the user plane control node forwards the data to a corresponding data collection center; or addresses to a corresponding data collection center in a bus manner within the core network. In an inter-RAN node case, it is generally transmitted through inter-node interfaces.

### Embodiment 2:

In this embodiment, a bearer management process related to data collection is mainly described.

The existing Uu interface has only two types of bearers: SRBs and DRBs. SRBs have default special attributes such as highest priority, infinite guaranteed bit rate, default enabling of encryption and integrity protection functions, and clearing a corresponding buffer and transmission variable during handover, which is not conducive to large-scale data collection processing: offering low efficiency and disrupting transmission of other normal data. For DRBs, complete core network control nodes are required for establishment, such as interaction of data flow attributes between AMF and gNB, and DRB data flows need a corresponding channel between gNB and a core network user plane entity such as UPF, and a standardized data path switching process during handover. Therefore, DRBs can only be suitable for data collection processes similar to UP transmission by a core network node through UPF, and therefore have severely limited adaptability.

Therefore, a new bearer type (that is, the dedicated bearer) needs to be designed, to first overcome the foregoing shortcomings, and second to be compatible with as many future data collection scenarios as possible, so as to offer a unified solution. The new bearer type needs a name different from SRB and DRB, such as CRB. In short, a special name is needed for differentiation, which is not limited in the embodiments of this application. For convenience of description, CRB is used as an example.

The new bearer type (for example, CRB) is dedicated to data collection-related control and information transmission. Its characteristics include at least one of the following:
The new type of bearer and the traditional SRB and DRB can all be present and allow for parallel transmission. Among bearers of UE, an SRB and a CRB can both be present and allow for parallel transmission, or an SRB, a DRB, and a CRB can all be present/allow for parallel transmission.

Establishment of a CRB can be based on a condition, such as successful RRC connection establishment, Uu interface security activation, obtaining of a UE-related capability, or the like.

A bearer identity of a CRB can be arranged together with a DRB/SRB, or arranged independently in a dedicated space. For example, in a protocol, SRB ID = 0, 1, 2, 3, 4, or the like, which is arranged independently of a DRB. An RB ID of a DRB is 1 to 32. In the 6G era, for example, if the DRB ID space is extended to a maximum of 64, the DRB can share the 64 ID spaces with the CRB, or a dedicated ID space of 1 to 32 can be specified for the CRB.

Related transmission attributes of a CRB can all be configurable, such as L2 SN length, length indicator (Length Indicator LI) length, segment offset (Segment offset, SO) length, whether to deliver in order, T-reordering timer length, RLC AM/UM operation, logical channel priority, guaranteed bit rate, and the like.

Related security attributes of a CRB can also be configurable, such as whether to perform air interface encryption, or whether to perform air interface integrity protection.

CRB segment attributes, that is, parameters. For example, in existing SRB or DRB, the maximum packet size is 9000 bytes, but it is highly likely that data collection or model transmission exceeds this limit, so special segment operations need to be considered.

Different QoS attributes of CRB. On a same CRB, multiple data collection data flows may be multiplexed. If the flows have different QoS attributes, an extra layer may be needed to explicitly carry distinctions of different data flow attributes.

Different processing of CRB during handover. Overall, there are three types of processing. In the first type, a buffer is cleared and a transmission variable is reset, with no service continuity guarantee, and the data collection process is performed again in a target cell. In the second type, an unsent or unacknowledged buffer is retained and a transmission variable is reset, to some extent allowing continuation of an unfinished data collection process in a target cell. In the third type, a buffer is retained and a transmission variable is retained, well achieving service continuity: allowing for no resource waste and enabling continuous reordering in the target cell.

The new bearer type (for example, CRB) can be a mandatory support feature and capability for 6G UE. But on the other hand, since CRB is not an essential requirement for UE communication like traditional SRB and DRB, the data collection function can be an additional or auxiliary function of UE. Therefore, the new bearer type CRB can also be an optional capability. Thus, 6G UE can report capabilities for CRB, including at least one of the following:
whether the UE supports a new bearer type CRB function, or which CRB capabilities are supported;
whether the UE supports a corresponding data collection function, or which data collection functions are supported;
a maximum number of CRBs supported by the UE; and
an optional capability range of each layer configured for the CRB supported by the UE.

If the new bearer type CRB is an optional 6G UE capability, after the UE reports the relevant capability, the network side can configure an appropriate CRB for the UE based on the capability and needs, thereby carrying different data collection requirements. The network side configuring the CRB for the UE mainly includes at least one of the following:
An independent field is used to perform addition, modification, and release of the CRB. Since the SRB and DRB each already have their own fields for addition, modification, and release (such as srb-ToAddModList, srb3-ToRelease, drb-ToAddModList, drb-ToReleaseList), the CRB, as a bearer type distinguished from the SRB and DRB, needs to an independent field such as crb-ToAddModList or crb-ToReleaseList for independent control operations. Alternatively, it is not excluded to add some additional configuration fields for the CRB in the existing bearer configuration fields, and merge the CRB configuration into the configuration of one of the bearer types.

RB ID and a corresponding layer attribute are configured for the CRB, such as a PDCP configuration, an RLC layer configuration corresponding to the CRB, or a MAC layer configuration. For configuration parameters, in addition to referencing existing parameters, the characteristics (such as the various characteristics listed above) of the CRB itself also need to be considered, such as transmission format, security optional configuration, priority, and guaranteed bit rate.

The CRB can be configured as a split bearer, for selective path transmission in MCG and SCG, or transmission via CA duplication and/or DC duplication.

The CRB can alternatively be configured for DAPS mode transmission, with the most flexible configuration.

In particular, mappings can alternatively be configured. That is, for each CRB, which data collection content is mapped to the CRB for transmission is configured. For the CRB, since the data flows of CRB are different from those of an SRB and a DRB, traditional protocol specifications or QoS flow configuration methods cannot be directly applied, new mapping rules are defined, such as one CRB corresponding to one DSAP-Uu or DSAP-CN entity, or one CRB corresponding to a certain application or a certain type of data in one DSAP-Uu/DSAP-CN.

For example, one CRB bearer can correspond to one DSAP-Uu entity 1, and the DSAP-Uu entity 1 is configured to transmit configuration or control information related to data collection, so the CRB can be configured in RLC AM mode because control information requires high reliability. Another CRB bearer can correspond to another DSAP-Uu entity 2, and the DSAP-Uu entity 2 is configured to transmit a large amount of data content related to data collection. Since the reliability requirements for data differ, a different RLC transmission mode can be configured.

For another example, one CRB bearer can correspond to one DSAP-Uu entity 3, and the DSAP-Uu entity 3 is configured for control and/or collection of sensing data, while another CRB bearer can correspond to another DSAP-Uu entity 4, and the DSAP-Uu entity 4 is configured for control and/or transfer of AI models.

For another example, one CRB bearer can correspond to one DSAP-Uu entity 5, and the DSAP-Uu entity 5 is configured for control and/or collection of sensing data between UE and a base station, while another CRB bearer can correspond to one DSAP-CN entity 1, and the DSAP-CN entity 1 is configured for control and/or collection of sensing data between the UE and the core network node.

For another example, one DSAP-Uu entity 6 can correspond to three CRB bearers, where control and/or collection of sensing data between UE and a base station in the DSAP-Uu entity 6 corresponds to CRB1, control and/or collection of positioning data between the UE and the base station in the DSAP-Uu entity 6 corresponds to CRB2, and control and/or collection of sensing data between the UE and the core network function in an embedded DSAP-CN entity 2 in the DSAP-Uu entity 6 corresponds to CRB3.

In a case that the CRB is in a one-to-one correspondence with a DSAP-Uu or DSAP-CN entity, the mapping only needs to associate the two.

In a case that the CRB corresponds to one type of data in a DSAP-Uu/DSAP-CN, the mapping can be configured as the association between the CRB and a specific data type (such as control information/data, or sensing/positioning/AI, CN/base station), or the association between the CRB and a specific data attribute (such as attribute 1, attribute 2, or attribute 3).

After the base station completes the CRB bearer configuration for the UE, the UE and the network can use the CRB to transmit control and information related to data collection. If a mapping has been configured between one or more CRB bearers and one DSAP-Uu/DSAP-CN entity, data over a CRB bearer within this scope can be naturally passed to the corresponding DSAP-Uu entity for processing, or transmitted to a corresponding DSAP-CN entity through a pipeline between gNB and a core network node. However, if data over one CRB bearer can have multiple different routes, necessary distinguishing information or routing information needs to be carried in a data packet, so that the corresponding data packet can find the correct processing entity. This includes at least one of the following:
In a case that a DSAP-Uu data packet and a DSAP-CN data packet are multiplexed over one CRB bearer, a data encapsulation method can be used for distinction. For example, a DSAP-CN data packet is carried in a DSAP-Uu data packet in the form of a container (container). Then, the data packet received over the CRB is first sent to a DSAP-Uu entity for processing. According to the DSAP-Uu data packet parsing method, if it is found that the packet is a packet of this layer, autonomous processing is performed. If it is found that the packet is a DSAP-CN container data packet, the packet is extracted and delivered to a corresponding DSAP-CN entity through a corresponding pipeline between gNB and a core network function.

In a case that multiple DSAP-CN data packets are multiplexed over one CRB bearer, each DSAP-CN data packet needs to be distinguished, for example, by carrying an explicit identity in the data packet to distinguish corresponding different DSAP-CN entities. Furthermore, this distinguishing processing, in addition to distinguishing different DSAP-CN entities, can further distinguish data types, and the like. For example, for a same core network positioning service entity, its data can also be marked as data flows 1 to 3, respectively for positioning control information, positioning reporting information, and positioning assistance information.

In a case that a DSAP-Uu data packet and multiple DSAP-CN data packets are multiplexed over one CRB bearer, in addition to encapsulating the DSAP-CN data packets, additional destination entity distinction or data flow distinction is needed, which can all carry explicit markers.

After various configuration methods are completed, the UE and the network can well utilize CRB bearers for data collection-related transmission with good routing, providing flexible configuration and management for different data needs, and ensuring transmission experience while improving system efficiency.

The method provided in the embodiments of this application enables the base station to perform processing during bearer establishment and handover as needed, ensuring the transmission efficiency of the UE's data collection, thereby reducing the complexity of the UE and improving system efficiency on the basis of ensuring the data collection effect.

It should be noted that the embodiments of this application can be applied to 5G, 6G, and the like, and are not limited to Uu and can be extended to other different versions, which is not specifically limited.

The information transmission method provided in the embodiments of this application may be performed by an information transmission apparatus. In the embodiments of this application, the information transmission apparatus provided in the embodiments of this application is described by taking an information transmission apparatus executing the information transmission method as an example.

The capability information reporting method provided in the embodiments of this application may be performed by a capability information reporting apparatus. In the embodiments of this application, the capability information reporting apparatus provided in the embodiments of this application is described by taking a capability information reporting apparatus executing the capability information reporting method as an example.

The capability information receiving method provided in the embodiments of this application may have an execution subject as a capability information receiving apparatus. In the embodiments of this application, the capability information receiving apparatus provided in the embodiments of this application is described by taking a capability information receiving apparatus executing the capability information receiving method as an example.

Refer to FIG. 10. FIG. 10 is a structural diagram of an information transmission apparatus provided in the embodiments of this application. As shown in FIG. 10, the information transmission apparatus 1000 includes:
an obtaining module 1001, configured to obtain a first configuration, where the first configuration is used for configuring a dedicated bearer for information transmission, and the dedicated bearer is independent of a signaling radio bearer SRB and a data radio bearer DRB; and
a transmission module 1002, configured to transmit information through the dedicated bearer.

Optionally, the dedicated bearer is used for at least one of the following:
information interaction between the terminal and a radio access network device; and
information interaction between the terminal and a core network function.

Optionally, the first configuration includes at least one of the following:
an identity of the dedicated bearer, attribute information of the dedicated bearer, routing-related information of the dedicated bearer, processing information of the dedicated bearer during a handover process, and a mapping of the dedicated bearer.

Optionally, the attribute information of the dedicated bearer includes at least one of the following:
attribute information of at least one protocol layer corresponding to the dedicated bearer, transmission configuration information of the dedicated bearer, security attribute information of the dedicated bearer, segment attribute information of the dedicated bearer, and a bearer type of the dedicated bearer.

Optionally, the transmission configuration information of the dedicated bearer includes at least one of the following:
a transmission mode of the dedicated bearer, a maximum data length of the dedicated bearer, reordering information of the dedicated bearer, a delivery mode of the dedicated bearer, a logical channel identity of the dedicated bearer, a logical channel priority of the dedicated bearer, and a guaranteed bit rate of the dedicated bearer.

Optionally, the bearer type of the dedicated bearer includes: split bearer; or
the transmission mode of the dedicated bearer includes at least one of the following: a radio link control RLC transmission mode, and a dual active protocol stack DAPS transmission mode.

Optionally, the mapping of the dedicated bearer includes at least one of the following:
a mapping between the dedicated bearer and a protocol entity; and
a mapping between the dedicated bearer and data of a protocol entity.

Optionally, the routing-related information of the dedicated bearer includes:
routing information of the dedicated bearer; or
packet format information, where the packet format information is used for determining routing information of a packet over the dedicated bearer.

Optionally, the first configuration is carried in a configuration message, where
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

Optionally, the dedicated bearer has at least one of the following characteristics:
the dedicated bearer is capable of being present with an SRB and a DRB;
parallel transmission is capable of being performed over the dedicated bearer, an SRB, and a DRB;
the dedicated bearer is capable of being present with an SRB;
parallel transmission is capable of being performed over the dedicated bearer and an SRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service QoS; and
the dedicated bearer supports cell handover.

Optionally, the attribute of the dedicated bearer includes at least one of the following:
a transmission configuration of the dedicated bearer, a security attribute of the dedicated bearer, and a segment attribute of the dedicated bearer.

Optionally, the dedicated bearer is used for transmitting information about at least one of the following protocol entities:
a service data adaptation protocol DSAP-core network CN entity; and
a DSAP-Uu entity.

Optionally, the apparatus further includes:
a receiving module, configured to receive a second configuration issued by a network-side device, where the second configuration is used for reconfiguring the dedicated bearer.

Optionally, in a case that a configuration changed by the second configuration does not affect layer 2, a state variable of a packet data convergence protocol PDCP entity and a state variable of a radio link control RLC entity that are corresponding to the dedicated bearer are maintained; or
in a case that a configuration changed by the second configuration has no explicit reset or no explicit reconstruction indication, a state variable of a packet data convergence protocol PDCP entity and a state variable of a radio link control RLC entity that are corresponding to the dedicated bearer are maintained; or
in a case that a configuration changed by the second configuration affects layer 2, the terminal reconstructs or resets at least one of a PDCP entity and an RLC entity that are corresponding to the dedicated bearer; or
in a case that a configuration changed by the second configuration carries an explicit reset or reconstruction indication, the terminal reconstructs or resets at least one of a PDCP entity and an RLC entity that are corresponding to the dedicated bearer.

Optionally, in a case of cell handover, the second configuration is used for configuring at least one of the following:
reset of an RLC entity corresponding to the dedicated bearer of the terminal; and
handover processing of a PDCP entity corresponding to the dedicated bearer of the terminal, where the handover processing includes at least one of the following:
   clearing a buffer and resetting a transmission variable;
   retaining a buffer and resetting a transmission variable; and
   retaining a buffer and a transmission variable.

Optionally, the apparatus further includes:
a reporting module, configured to report capability information of the dedicated bearer.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

The above information transmission apparatus can improve the transmission performance of the terminal.

The information transmission apparatus in the embodiments of this application may be an electronic device, such as an electronic device with an operating system, or a component in an electronic device, such as an integrated circuit or a chip. For example, the electronic device may be a terminal or another device other than the terminal. For example, the terminal may include but is not limited to the types of terminals listed in the embodiments of this application, and the another device may be a server, a network attached storage (Network Attached Storage, NAS), or the like. This is not specifically limited in the embodiments of this application.

The information transmission apparatus provided in the embodiments of this application can implement various processes achieved by the method embodiment shown in FIG. 2, with the same technical effects achieved. To avoid repetition, details are not provided again herein.

Refer to FIG. 11. FIG. 11 is a structural diagram of a capability information reporting apparatus provided in the embodiments of this application. As shown in FIG. 11, the capability information reporting apparatus 1100 includes:
a reporting module 1101, configured to report capability information of a dedicated bearer;
where the dedicated bearer is a dedicated bearer for information transmission, and the dedicated bearer is independent of an SRB and a DRB.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

The above capability information reporting apparatus can improve the transmission performance of the terminal.

The capability information reporting apparatus in the embodiments of this application may be an electronic device, such as an electronic device with an operating system, or a component in an electronic device, such as an integrated circuit or a chip. For example, the electronic device may be a terminal or another device other than the terminal. For example, the terminal may include but is not limited to the types of terminals listed in the embodiments of this application, and the another device may be a server, NAS, or the like. This is not specifically limited in the embodiments of this application.

The capability information reporting apparatus provided in the embodiments of this application can implement various processes achieved by the method embodiment shown in FIG. 8, with the same technical effects achieved. To avoid repetition, details are not provided again herein.

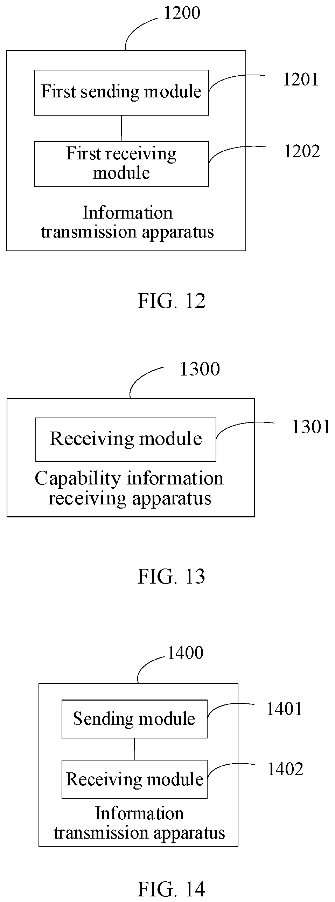

Refer to FIG. 12. FIG. 12 is a structural diagram of another information transmission apparatus provided in the embodiments of this application. As shown in FIG. 12, the information transmission apparatus 1200 includes:
a first sending module 1201, configured to send a first configuration to a terminal, where the first configuration is used for configuring a dedicated bearer for information transmission, and the dedicated bearer is independent of a signaling radio bearer SRB and a data radio bearer DRB; and
a first receiving module 1202, configured to receive information from the terminal through the dedicated bearer.

Optionally, the dedicated bearer is used for at least one of the following:
information interaction between the terminal and a second radio access network device; and
information interaction between the terminal and a core network function.

Optionally, the first configuration includes at least one of the following:
an identity of the dedicated bearer, attribute information of the dedicated bearer, routing-related information of the dedicated bearer, processing information of the dedicated bearer during a handover process, and a mapping of the dedicated bearer.

Optionally, the attribute information of the dedicated bearer includes at least one of the following:
attribute information of at least one protocol layer corresponding to the dedicated bearer, transmission configuration information of the dedicated bearer, security attribute information of the dedicated bearer, segment attribute information of the dedicated bearer, and a bearer type of the dedicated bearer.

Optionally, the transmission configuration information of the dedicated bearer includes at least one of the following:
a transmission mode of the dedicated bearer, a maximum data length of the dedicated bearer, reordering timing information of the dedicated bearer, a delivery mode of the dedicated bearer, a logical channel identity of the dedicated bearer, a logical channel priority of the dedicated bearer, and a guaranteed bit rate of the dedicated bearer.

Optionally, the bearer type of the dedicated bearer includes: split bearer; or
the transmission mode of the dedicated bearer includes at least one of the following: a radio link control RLC transmission mode, and a dual active protocol stack DAPS transmission mode.

Optionally, the mapping of the dedicated bearer includes at least one of the following:
a mapping between the dedicated bearer and a protocol entity; and
a mapping between the dedicated bearer and data of a protocol entity.

Optionally, the routing-related information of the dedicated bearer includes:
routing information of the dedicated bearer; or
packet format information, where the packet format information is used for determining routing information of a packet over the dedicated bearer.

Optionally, the first configuration is carried in a configuration message, where
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

Optionally, the dedicated bearer has at least one of the following characteristics:
the dedicated bearer is capable of being present with a signaling radio bearer SRB and a data radio bearer DRB;
parallel transmission is capable of being performed over the dedicated bearer, an SRB, and a DRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service QoS; and
the dedicated bearer supports cell handover.

Optionally, the attribute of the dedicated bearer includes at least one of the following:
a transmission configuration of the dedicated bearer, a security attribute of the dedicated bearer, and a segment attribute of the dedicated bearer.

Optionally, the dedicated bearer is used for transmitting information about at least one of the following protocol entities:
a service data adaptation protocol DSAP-Uu entity;
a DSAP-Ng entity, where the DSAP-Ng entity is used for interaction between the first radio access network device and a core network function; and
a DSAP-Xn entity, where the DSAP-Xn entity is used for interaction between the first radio access network device and another radio access network device.

Optionally, the apparatus further includes:
a second sending module, configured to send a second configuration to the terminal, where the second configuration is used for reconfiguring the dedicated bearer.

Optionally, in a case that a configuration changed by the second configuration does not affect layer 2, a state variable of a packet data convergence protocol PDCP entity and a state variable of a radio link control RLC entity that are corresponding to the dedicated bearer are maintained; or
in a case that a configuration changed by the second configuration has no explicit reset or no explicit reconstruction indication, a state variable of a packet data convergence protocol PDCP entity and a state variable of a radio link control RLC entity that are corresponding to the dedicated bearer are maintained; or
in a case that a configuration changed by the second configuration affects layer 2, the radio access network device reconstructs or resets at least one of a PDCP entity and an RLC entity that are corresponding to the dedicated bearer; or
in a case that a configuration changed by the second configuration carries an explicit reset or reconstruction indication, the radio access network device reconstructs or resets at least one of a PDCP entity and an RLC entity that are corresponding to the dedicated bearer.

Optionally, in a case of cell handover, the second configuration is used for configuring at least one of the following:
reset of an RLC entity corresponding to the dedicated bearer of the terminal; and
handover processing of a PDCP entity corresponding to the dedicated bearer of the terminal, where the handover processing includes at least one of the following:
   clearing a buffer and resetting a transmission variable;
   retaining a buffer and resetting a transmission variable; and
   retaining a buffer and a transmission variable.

Optionally, the apparatus further includes:
a second receiving module, configured to receive capability information that is reported by the terminal and that is of the dedicated bearer of the terminal.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

Optionally, the sending a first configuration to a terminal includes at least one of the following:
in a case that the radio access network device triggers information transmission, sending the first configuration to the terminal;
in a case that the radio access network device receives a first trigger message sent by the core network for triggering information transmission, sending the first configuration to the terminal; and
in a case that the radio access network device receives a second trigger message sent by another radio access network device for triggering information transmission, sending the first configuration to the terminal.

Optionally, in a case that the radio access network device receives a first trigger message sent by the core network for triggering information transmission, the apparatus further includes:
a third sending module, configured to transparently transmit the information to the core network; or
a fourth sending module, configured to process the information for the core network and send the processed information to the core network.

The information transmission apparatus can improve the transmission performance of the terminal.

The information transmission apparatus in the embodiments of this application may be an electronic device, such as an electronic device with an operating system, or a component in an electronic device, such as an integrated circuit or a chip. The electronic device may be a terminal or a network-side device.

The information transmission apparatus provided in the embodiments of this application can implement various processes achieved by the method embodiment shown in FIG. 4, with the same technical effects achieved. To avoid repetition, details are not provided again herein.

Refer to FIG. 13. FIG. 13 is a structural diagram of a capability information receiving apparatus provided in the embodiments of this application. As shown in FIG. 13, the capability information receiving apparatus 1300 includes:
a receiving module 1301, configured to receive capability information that is reported by a terminal and that is of a dedicated bearer of the terminal;
where the dedicated bearer is a dedicated bearer for information transmission, and the dedicated bearer is independent of an SRB and a DRB.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

The above capability information receiving apparatus can improve the transmission performance of the terminal.

The capability information receiving apparatus in the embodiments of this application may be an electronic device, such as an electronic device with an operating system, or a component in an electronic device, such as an integrated circuit or a chip. The electronic device may be a terminal or a network-side device.

The capability information receiving apparatus provided in the embodiments of this application can implement various processes achieved by the method embodiment shown in FIG. 5, with the same technical effects achieved. To avoid repetition, details are not provided again herein.

Refer to FIG. 14. FIG. 14 is a structural diagram of another information transmission apparatus provided in the embodiments of this application. As shown in FIG. 14, the information transmission apparatus 1400 includes:
a sending module 1401, configured to send a trigger message for triggering information transmission to a radio access network device; and
a receiving module 1402, configured to receive information from the radio access network device or a control node;
where the information is information transmitted by a terminal through a dedicated bearer; or the information is information generated based on information transmitted by a terminal through a dedicated bearer; where the dedicated bearer is a dedicated bearer for information transmission, and the dedicated bearer is independent of a signaling radio bearer SRB and a data radio bearer DRB.

Optionally, the control node includes:
a control plane control node, or a user plane control node.

Optionally, the receiving module 1402 receives the information from the control node through a service data adaptation protocol DSAP-core network CN entity; or
the receiving module 1402 receives, through a DSAP-Ng entity, the information that is sent by the radio access network device and that is processed by the radio access network device.

The above information transmission apparatus can improve the transmission performance of the terminal.

The information transmission apparatus in the embodiments of this application may be an electronic device, such as an electronic device with an operating system, or a component in an electronic device, such as an integrated circuit or a chip. The electronic device may be a terminal or a network-side device.

The information transmission apparatus provided in the embodiments of this application can implement various processes achieved by the method embodiment shown in FIG. 9, with the same technical effects achieved. To avoid repetition, details are not provided again herein.

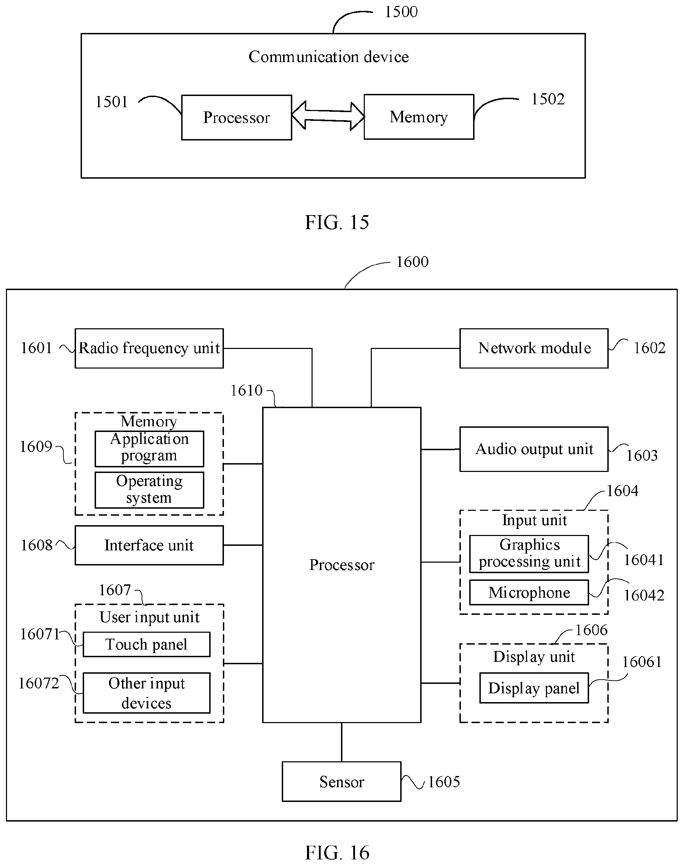

Optionally, as shown in FIG. 15, an embodiment of this application further provides a communication device 1500, including a processor 1501 and a memory 1502. A program or instruction capable of running on the processor 1501 is stored on the memory 1502. For example, in a case that the communication device 1500 is a terminal, when the program or instruction is executed by the processor 1501, various steps of the embodiments of the information transmission method on the terminal side are implemented, with the same technical effects achieved. In a case that the communication device 1500 is a radio access network device, when the program or instruction is executed by the processor 1501, various steps of the embodiments of the information transmission method on the radio access network device side are implemented, with the same technical effects achieved. In a case that the communication device 1500 is a core network function, when the program or instruction is executed by the processor 1501, various steps of the embodiments of the information transmission method on the core network function side are implemented, with the same technical effects achieved. To avoid repetition, details are not provided again herein.

An embodiment of this application further provides a communication device, including a processor and a communication interface, where the communication interface is configured to obtain a first configuration, the first configuration is used for configuring a dedicated bearer for information transmission, and the dedicated bearer is independent of an SRB and a DRB; and a transmission module, configured to transmit information through the dedicated bearer. The embodiment of the communication device corresponds to the above embodiment of the sensing measurement result processing method, and various implementation processes and implementations of the above method embodiment can all be applied to the embodiment of the communication device, with the same technical effects achieved.

An embodiment of this application further provides a communication device, including a processor and a communication interface. The communication interface is configured to report capability information of a dedicated bearer; where the dedicated bearer is a dedicated bearer for information transmission, and the dedicated bearer is independent of an SRB and a DRB. The embodiment of the communication device corresponds to the above embodiment of the capability information reporting method, and various implementation processes and implementations of the above method embodiment can all be applied to the embodiment of the communication device, with the same technical effects achieved.

Specifically, FIG. 16 is a schematic diagram of a hardware structure of a terminal implementing an embodiment of this application.

The terminal 1600 includes but is not limited to: at least some components of a radio frequency unit 1601, a network module 1602, an audio output unit 1603, an input unit 1604, a sensor 1605, a display unit 1606, a user input unit 1607, an interface unit 1608, a memory 1609, and a processor 1610.

Those skilled in the art can understand that the terminal 1600 may further include a power supply (such as a battery) for supplying power to various components. The power supply can be logically connected to the processor 1610 through a power management system, thereby implementing functions such as charging, discharging, and power consumption management through the power management system. The terminal structure shown in FIG. 16 does not constitute a limitation on the terminal. The terminal may include more or fewer components than shown, or combine certain components, or have a different component arrangement. Details are not described herein.

It should be understood that in the embodiments of this application, the input unit 1604 may include a graphics processing unit (Graphics Processing Unit, GPU) 16041 and a microphone 16042. The graphics processing unit 16041 processes image data of a still picture or a video obtained by an image capture apparatus (such as a camera) in a video capture mode or an image capture mode. The display unit 1606 may include a display panel 16061, and the display panel 16061 may be configured in the form of a liquid crystal display, an organic light-emitting diode, or the like. The user input unit 1607 includes at least one of a touch panel 16071 and other input terminals 16072. The touch panel 16071 is also referred to as a touchscreen. The touch panel 16071 may include two parts: a touch detection apparatus and a touch controller. The other input terminals 16072 may include, but are not limited to, a physical keyboard, a function key (such as a volume control key and a switch key), a trackball, a mouse, a joystick, and the like, which will not be described in detail herein.

In the embodiments of this application, after the radio frequency unit 1601 receives downlink data from a network-side terminal, it may transmit the data to the processor 1610 for processing. In addition, the radio frequency unit 1601 may send uplink data to the network-side terminal. Typically, the radio frequency unit 1601 includes, but is not limited to, an antenna, an amplifier, a transceiver, a coupler, a low noise amplifier, a duplexer, and the like.

The memory 1609 may be configured to store software programs or instructions as well as various data. The memory 1609 may mainly include a first storage area for storing programs or instructions and a second storage area for storing data. The first storage area may store an operating system, application programs or instructions required for at least one function (such as a sound play function or an image play function), and the like. In addition, the memory 1609 may include a volatile memory or a non-volatile memory, or the memory 1609 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1609 in the embodiments of this application includes, but is not limited to, these and any other suitable types of memories.

The processor 1610 may include one or more processing units. Optionally, the processor 1610 integrates an application processor and a modem processor. The application processor mainly processes operations related to an operating system, a user interface, and an application program, and the modem processor mainly processes wireless communication signals, such as a baseband processor. It can be understood that the modem processor may not be integrated into the processor 1610.

In one embodiment,
the radio frequency unit 1601 is configured to obtain a first configuration, the first configuration is used for configuring a dedicated bearer for information transmission, and the dedicated bearer is independent of a signaling radio bearer SRB and a data radio bearer DRB; and transmit information through the dedicated bearer.

Optionally, the dedicated bearer is used for at least one of the following:
information interaction between the terminal and a radio access network device; and
information interaction between the terminal and a core network function.

Optionally, the first configuration includes at least one of the following:
an identity of the dedicated bearer, attribute information of the dedicated bearer, routing-related information of the dedicated bearer, processing information of the dedicated bearer during a handover process, and a mapping of the dedicated bearer.

Optionally, the attribute information of the dedicated bearer includes at least one of the following:
attribute information of at least one protocol layer corresponding to the dedicated bearer, transmission configuration information of the dedicated bearer, security attribute information of the dedicated bearer, segment attribute information of the dedicated bearer, and a bearer type of the dedicated bearer.

Optionally, the transmission configuration information of the dedicated bearer includes at least one of the following:
a transmission mode of the dedicated bearer, a maximum data length of the dedicated bearer, reordering information of the dedicated bearer, a delivery mode of the dedicated bearer, a logical channel identity of the dedicated bearer, a logical channel priority of the dedicated bearer, and a guaranteed bit rate of the dedicated bearer.

Optionally, the bearer type of the dedicated bearer includes: split bearer; or
the transmission mode of the dedicated bearer includes at least one of the following: a radio link control RLC transmission mode, and a dual active protocol stack DAPS transmission mode.

Optionally, the mapping of the dedicated bearer includes at least one of the following:
a mapping between the dedicated bearer and a protocol entity; and
a mapping between the dedicated bearer and data of a protocol entity.

Optionally, the routing-related information of the dedicated bearer includes:
routing information of the dedicated bearer; or
packet format information, where the packet format information is used for determining routing information of a packet over the dedicated bearer.

Optionally, the first configuration is carried in a configuration message, where
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

Optionally, the dedicated bearer has at least one of the following characteristics:
the dedicated bearer is capable of being present with an SRB and a DRB;
parallel transmission is capable of being performed over the dedicated bearer, an SRB, and a DRB;
the dedicated bearer is capable of being present with an SRB;
parallel transmission is capable of being performed over the dedicated bearer and an SRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service QoS; and
the dedicated bearer supports cell handover.

Optionally, the attribute of the dedicated bearer includes at least one of the following:
a transmission configuration of the dedicated bearer, a security attribute of the dedicated bearer, and a segment attribute of the dedicated bearer.

Optionally, the dedicated bearer is used for transmitting information about at least one of the following protocol entities:
a service data adaptation protocol DSAP-core network CN entity; and
a DSAP-Uu entity.

Optionally, the radio frequency unit 1601 is further configured to receive a second configuration issued by a network-side device, and the second configuration is used for reconfiguring the dedicated bearer.

Optionally, in a case that a configuration changed by the second configuration does not affect layer 2, a state variable of a packet data convergence protocol PDCP entity and a state variable of a radio link control RLC entity that are corresponding to the dedicated bearer are maintained; or
in a case that a configuration changed by the second configuration has no explicit reset or no explicit reconstruction indication, a state variable of a packet data convergence protocol PDCP entity and a state variable of a radio link control RLC entity that are corresponding to the dedicated bearer are maintained; or
in a case that a configuration changed by the second configuration affects layer 2, the terminal reconstructs or resets at least one of a PDCP entity and an RLC entity that are corresponding to the dedicated bearer; or
in a case that a configuration changed by the second configuration carries an explicit reset or reconstruction indication, the terminal reconstructs or resets at least one of a PDCP entity and an RLC entity that are corresponding to the dedicated bearer.

Optionally, in a case of cell handover, the second configuration is used for configuring at least one of the following:
reset of an RLC entity corresponding to the dedicated bearer of the terminal; and
handover processing of a PDCP entity corresponding to the dedicated bearer of the terminal, where the handover processing includes at least one of the following:
   clearing a buffer and resetting a transmission variable;
   retaining a buffer and resetting a transmission variable; and
   retaining a buffer and a transmission variable.

Optionally, the radio frequency unit 1601 is further configured to report capability information of the dedicated bearer.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

In another embodiment,
the radio frequency unit 1601 is configured to report capability information of a dedicated bearer; where the dedicated bearer is a dedicated bearer for information transmission, and the dedicated bearer is independent of an SRB and a DRB.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

The above terminal can improve the transmission performance of the terminal.

It can be understood that for the implementation processes of the various implementations mentioned in this embodiment, reference can be made to the relevant descriptions of the above sensing measurement result sending method, with the same or corresponding technical effects achieved. To avoid repetition, details are not provided again herein.

The embodiments of this application further provide a device, including a processor and a communication interface, the communication interface and the processor are coupled, and the processor is configured to run a program or instructions to implement the steps of the method embodiments shown in FIG. 4 or FIG. 5. This device embodiment corresponds to the embodiment of the above sensing measurement result sending method, and various implementation processes and implementations of the above method embodiment can all be applied to this device embodiment, with the same technical effects achieved.

The embodiments of this application further provide a device, including a processor and a communication interface, where the communication interface is configured to send a first configuration to a terminal, the first configuration is used for configuring a dedicated bearer for information transmission, and the dedicated bearer is independent of an SRB and a DRB; and a receiving module, configured to receive information from the terminal through the dedicated bearer.

The embodiments of this application further provide a device, including a processor and a communication interface. The communication interface is configured to receive capability information that is reported by a terminal and that is of a dedicated bearer of the terminal; where the dedicated bearer is a dedicated bearer for information transmission, and the dedicated bearer is independent of an SRB and a DRB.

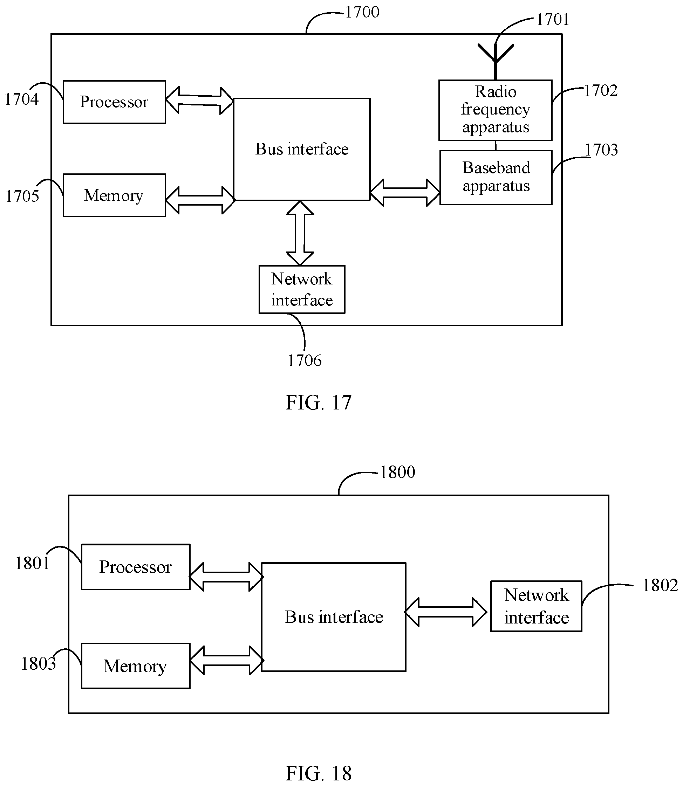

Specifically, the embodiments of this application further provide a radio access network device. As shown in FIG. 17, the radio access network device 1700 includes: an antenna 1701, a radio frequency device 1702, a baseband device 1703, a processor 1704, and a memory 1705. The antenna 1701 is connected to the radio frequency device 1702. In uplink, the radio frequency device 1702 receives information through the antenna 1701 and sends the received information to the baseband device 1703 for processing. In downlink, the baseband device 1703 processes the information to be sent and sends it to the radio frequency device 1702, and the radio frequency device 1702 processes the received information and sends it out through the antenna 1701.

The sensing measurement method in the above embodiments can be implemented in the baseband device 1703, which includes a baseband processor.

The baseband device 1703 may, for example, include at least one baseband board, and multiple chips are provided on the baseband board. As shown in FIG. 17, one chip is, for example, a baseband processor connected to the memory 1705 through a bus interface to call a program in the memory 1705 and execute the device operations shown in the above method embodiments.

The device may further include a network interface 1706. The interface is, for example, a common public radio interface (Common Public Radio Interface, CPRI).

Specifically, the device 1700 of the embodiments of this application further includes: an instruction or a program stored on the memory 1705 and runnable on the processor 1704. The processor 1704 calls the instruction or program in the memory 1705 to execute the methods performed by the various modules shown in FIG. 12 or 13, with the same technical effects achieved. To avoid repetition, details are not provided again herein.

In one embodiment,
the radio frequency device 1702 is configured to send a first configuration to a terminal, where the first configuration is used for configuring a dedicated bearer for information transmission, and the dedicated bearer is independent of a signaling radio bearer SRB and a data radio bearer DRB; and receive information from the terminal through the dedicated bearer.

Optionally, the dedicated bearer is used for at least one of the following:
information interaction between the terminal and a second radio access network device; and
information interaction between the terminal and a core network function.

Optionally, the first configuration includes at least one of the following:
an identity of the dedicated bearer, attribute information of the dedicated bearer, routing-related information of the dedicated bearer, processing information of the dedicated bearer during a handover process, and a mapping of the dedicated bearer.

Optionally, the attribute information of the dedicated bearer includes at least one of the following:
attribute information of at least one protocol layer corresponding to the dedicated bearer, transmission configuration information of the dedicated bearer, security attribute information of the dedicated bearer, segment attribute information of the dedicated bearer, and a bearer type of the dedicated bearer.

Optionally, the transmission configuration information of the dedicated bearer includes at least one of the following:
a transmission mode of the dedicated bearer, a maximum data length of the dedicated bearer, reordering timing information of the dedicated bearer, a delivery mode of the dedicated bearer, a logical channel identity of the dedicated bearer, a logical channel priority of the dedicated bearer, and a guaranteed bit rate of the dedicated bearer.

Optionally, the bearer type of the dedicated bearer includes: split bearer; or
the transmission mode of the dedicated bearer includes at least one of the following: a radio link control RLC transmission mode, and a dual active protocol stack DAPS transmission mode.

Optionally, the mapping of the dedicated bearer includes at least one of the following:
a mapping between the dedicated bearer and a protocol entity; and
a mapping between the dedicated bearer and data of a protocol entity.

Optionally, the routing-related information of the dedicated bearer includes:
routing information of the dedicated bearer; or
packet format information, where the packet format information is used for determining routing information of a packet over the dedicated bearer.

Optionally, the first configuration is carried in a configuration message, where
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

Optionally, the dedicated bearer has at least one of the following characteristics:
the dedicated bearer is capable of being present with a signaling radio bearer SRB and a data radio bearer DRB;
parallel transmission is capable of being performed over the dedicated bearer, an SRB, and a DRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service QoS; and
the dedicated bearer supports cell handover.

Optionally, the attribute of the dedicated bearer includes at least one of the following:
a transmission configuration of the dedicated bearer, a security attribute of the dedicated bearer, and a segment attribute of the dedicated bearer.

Optionally, the dedicated bearer is used for transmitting information about at least one of the following protocol entities:
a service data adaptation protocol DSAP-Uu entity;
a DSAP-Ng entity, where the DSAP-Ng entity is used for interaction between the first radio access network device and a core network function; and
a DSAP-Xn entity, where the DSAP-Xn entity is used for interaction between the first radio access network device and another radio access network device.

Optionally, the radio frequency device 1702 is further configured to send a second configuration to the terminal, and the second configuration is used for reconfiguring the dedicated bearer.

Optionally, in a case that a configuration changed by the second configuration does not affect layer 2, a state variable of a packet data convergence protocol PDCP entity and a state variable of a radio link control RLC entity that are corresponding to the dedicated bearer are maintained; or
in a case that a configuration changed by the second configuration has no explicit reset or no explicit reconstruction indication, a state variable of a packet data convergence protocol PDCP entity and a state variable of a radio link control RLC entity that are corresponding to the dedicated bearer are maintained; or
in a case that a configuration changed by the second configuration affects layer 2, the radio access network device reconstructs or resets at least one of a PDCP entity and an RLC entity that are corresponding to the dedicated bearer; or
in a case that a configuration changed by the second configuration carries an explicit reset or reconstruction indication, the radio access network device reconstructs or resets at least one of a PDCP entity and an RLC entity that are corresponding to the dedicated bearer.

Optionally, in a case of cell handover, the second configuration is used for configuring at least one of the following:
reset of an RLC entity corresponding to the dedicated bearer of the terminal; and
handover processing of a PDCP entity corresponding to the dedicated bearer of the terminal, where the handover processing includes at least one of the following:
   clearing a buffer and resetting a transmission variable;
   retaining a buffer and resetting a transmission variable; and
   retaining a buffer and a transmission variable.

Optionally, the radio frequency device 1702 is further configured to receive capability information that is reported by the terminal and that is of the dedicated bearer of the terminal.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

Optionally, the sending a first configuration to a terminal includes at least one of the following:
in a case that the radio access network device triggers information transmission, sending the first configuration to the terminal;
in a case that the radio access network device receives a first trigger message for triggering information transmission and sent by the core network, sending the first configuration to the terminal; and
in a case that the radio access network device receives a second trigger message for triggering information transmission and sent by another radio access network device, sending the first configuration to the terminal.

Optionally, in a case that the radio access network device receives a first trigger message for triggering information transmission and sent by the core network, the radio frequency device 1702 is further configured to:
transparently transmit the information to the core network; or
process the information for the core network and send the processed information to the core network.

In another embodiment,
the radio frequency device 1702 is configured to receive capability information that is reported by a terminal and that is of a dedicated bearer of the terminal; where the dedicated bearer is a dedicated bearer for information transmission, and the dedicated bearer is independent of an SRB and a DRB.

Optionally, the capability information includes at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

The above device can improve the transmission performance of the terminal.

It can be understood that for the implementation processes of the various implementations mentioned in this embodiment, reference can be made to the relevant descriptions of the above method embodiments, with the same or corresponding technical effects achieved. To avoid repetition, details are not provided again herein.

The embodiments of this application further provide a device, including a processor and a communication interface. The communication interface and the processor are coupled, and the processor is used to run a program or instruction to implement the steps of the method embodiment shown in FIG. 6. This device embodiment corresponds to the above signal measurement method embodiment, and various implementation processes and implementations of the above method embodiment can all be applied to this device embodiment, with the same technical effects achieved.

The embodiments of this application further provide a device, including a processor and a communication interface. The communication interface is configured to send a trigger message for triggering information transmission to a radio access network device; and receive information from the radio access network device or a control node; where the information is information transmitted by a terminal through a dedicated bearer; or the information is information generated based on information transmitted by a terminal through a dedicated bearer; where the dedicated bearer is a dedicated bearer for information transmission, and the dedicated bearer is independent of a signaling radio bearer SRB and a data radio bearer DRB.

Specifically, the embodiments of this application further provide a network-side device. As shown in FIG. 18, the network-side device 1800 includes: a processor 1801, a network interface 1802, and a memory 1803. The network interface 1802 is, for example, a common public radio interface (common public radio interface, CPRI).

Specifically, the network-side device 1800 of the embodiments of this application further includes: an instruction or a program stored on the memory 1803 and runnable on the processor 1801. The processor 1801 calls the instruction or program in the memory 1803 to execute the methods performed by the various modules shown in FIG. 12, with the same technical effects achieved. To avoid repetition, details are not provided again herein.

The network interface 1802 is configured to send a trigger message for triggering information transmission to a radio access network device; and receive information from the radio access network device or a control node;
where the information is information transmitted by a terminal through a dedicated bearer; or the information is information generated based on information transmitted by a terminal through a dedicated bearer; where the dedicated bearer is a dedicated bearer for information transmission, and the dedicated bearer is independent of a signaling radio bearer SRB and a data radio bearer DRB.

Optionally, the control node includes:
a control plane control node, or a user plane control node.

Optionally, the network interface 1802 receives information from the control node through a service data adaptation protocol DSAP-core network CN entity; or
the network interface 1802 receives, through a DSAP-Ng entity, information that is sent by the radio access network device and that is processed by the radio access network device.

The above device can improve the transmission performance of the terminal.

It can be understood that for the implementation processes of the various implementations mentioned in this embodiment, reference can be made to the relevant descriptions of the above method embodiments, with the same or corresponding technical effects achieved. To avoid repetition, details are not provided again herein.

The embodiments of this application further provide a readable storage medium, and the readable storage medium stores a program or an instruction. When the program or instruction is executed by a processor, the various processes of the embodiment of the above information transmission method, capability information reporting method, or capability information receiving method can be implemented, with the same technical effects achieved. To avoid repetition, details are not provided again herein.

The processor is the processor in the terminal described in the above embodiments. The readable storage medium includes a computer-readable storage medium, such as a ROM, a RAM, a magnetic disk, or an optical disk. In some examples, the readable storage medium may be a non-transitory readable storage medium.

The embodiments of this application further provide a chip, the chip includes a processor and a communication interface, the communication interface and the processor are coupled, and the processor is configured to run a program or an instruction to implement the various processes of the embodiment of the above information transmission method, capability information reporting method, or capability information receiving method, with the same technical effects achieved. To avoid repetition, details are not provided again herein.

It should be understood that the chip mentioned in the embodiments of this application may also be referred to as a system-level chip, system chip, chip system, or system-on-chip, and the like.

The embodiments of this application further provide a computer program/program product, the computer program/program product is stored in a storage medium, and the computer program/program product is executed by at least one processor to implement the various processes of the embodiment of the above information transmission method, capability information reporting method, or capability information receiving method, with the same technical effects achieved. To avoid repetition, details are not provided again herein.

The embodiments of this application further provide a wireless communication system, including: a terminal, a radio access network device, and a core network function. The terminal can be configured to perform the steps of the information transmission method on the terminal side provided in the embodiments of this application, the radio access network device can be configured to perform the steps of the information transmission method on the radio access network device side provided in the embodiments of this application, and the core network function can be configured to perform the steps of the information transmission method on the core network function side provided in the embodiments of this application.

The embodiments of this application further provide a wireless communication system, including: a terminal and a radio access network device. The terminal can be configured to perform the steps of the information transmission method on the terminal side provided in the embodiments of this application, or the terminal can be configured to perform the steps of the capability information reporting method provided in the embodiments of this application, and the radio access network device can be configured to perform the steps of the information transmission method on the radio access network device side provided in the embodiments of this application, or the radio access network device can be configured to perform the steps of the capability information receiving method provided in the embodiments of this application.

It should be noted that, in the specification, the terms "include", "comprise" or any other variant thereof are intended to cover non-exclusive inclusion, so that a process, method, article, or apparatus that includes a series of elements not only includes those elements, but also includes other elements not explicitly listed, or elements inherent to such process, method, article, or apparatus. Without further limitation, an element defined by the statement "including a ..." does not exclude the presence of additional identical elements in the process, method, article, or apparatus that includes the element. In addition, it should be pointed out that the scope of the methods and devices in the embodiments of this application is not limited to performing functions in the order shown or discussed, and may alternatively include performing functions substantially simultaneously or in the reverse order according to the functions involved. For example, the described method may be performed in a different order than described, and various steps may also be added, omitted, or combined. In addition, features described with reference to certain examples may be combined in other examples.

Through the description of the above embodiments, those skilled in the art can clearly understand that the methods of the above embodiments can be implemented by means of a computer software product plus a necessary general hardware platform, and certainly, can alternatively be implemented by hardware. The computer software product is stored in a storage medium (such as a ROM, a RAM, a magnetic disk, or an optical disk) and includes several instructions to make a terminal or network-side device execute the methods described in various embodiments of this application.

The embodiments of this application have been described above in conjunction with the accompanying drawings, but this application is not limited to the foregoing embodiments described above. The foregoing embodiments are merely illustrative rather than restrictive. Those of ordinary skill in the art, under the inspiration of this application, can make many forms of embodiments without departing from the spirit of this application and the scope of the claims, and these embodiments all shall fall under the protection scope of this application.

## Claims

1. An information transmission method, comprising:
obtaining, by a terminal, a first configuration, wherein the first configuration is used for configuring a dedicated bearer for information transmission, and the dedicated bearer is independent of a signaling radio bearer SRB and a data radio bearer DRB; and
transmitting, by the terminal, information through the dedicated bearer.

2. The method according to claim 1, wherein the dedicated bearer is used for at least one of the following:
information interaction between the terminal and a radio access network device; and
information interaction between the terminal and a core network function.

3. The method according to claim 1 or 2, wherein the first configuration comprises at least one of the following:
an identity of the dedicated bearer, attribute information of the dedicated bearer, routing-related information of the dedicated bearer, processing information of the dedicated bearer during a handover process, and a mapping of the dedicated bearer.

4. The method according to claim 3, wherein the attribute information of the dedicated bearer comprises at least one of the following:
attribute information of at least one protocol layer corresponding to the dedicated bearer, transmission configuration information of the dedicated bearer, security attribute information of the dedicated bearer, segment attribute information of the dedicated bearer, and a bearer type of the dedicated bearer.

5. The method according to claim 4, wherein the transmission configuration information of the dedicated bearer comprises at least one of the following:
a transmission mode of the dedicated bearer, a maximum data length of the dedicated bearer, reordering information of the dedicated bearer, a delivery mode of the dedicated bearer, a logical channel identity of the dedicated bearer, a logical channel priority of the dedicated bearer, and a guaranteed bit rate of the dedicated bearer.

6. The method according to claim 4 or 5, wherein the bearer type of the dedicated bearer comprises: split bearer; or
the transmission mode of the dedicated bearer comprises at least one of the following: a radio link control RLC transmission mode, and a dual active protocol stack DAPS transmission mode.

7. The method according to any one of claims 4 to 6, wherein the mapping of the dedicated bearer comprises at least one of the following:
a mapping between the dedicated bearer and a protocol entity; and
a mapping between the dedicated bearer and data of a protocol entity.

8. The method according to any one of claims 4 to 7, wherein the routing-related information of the dedicated bearer comprises:
routing information of the dedicated bearer; or
packet format information, wherein the packet format information is used for determining routing information of a packet over the dedicated bearer.

9. The method according to any one of claims 1 to 8, wherein the first configuration is carried in a configuration message, wherein
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

10. The method according to any one of claims 1 to 9, wherein the dedicated bearer has at least one of the following characteristics:
the dedicated bearer is capable of being present with an SRB and a DRB;
parallel transmission is capable of being performed over the dedicated bearer, an SRB, and a DRB;
the dedicated bearer is capable of being present with an SRB;
parallel transmission is capable of being performed over the dedicated bearer and an SRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service QoS; and
the dedicated bearer supports cell handover.

11. The method according to claim 10, wherein the attribute of the dedicated bearer comprises at least one of the following:
a transmission configuration of the dedicated bearer, a security attribute of the dedicated bearer, and a segment attribute of the dedicated bearer.

12. The method according to any one of claims 1 to 11, wherein the dedicated bearer is used for transmitting information about at least one of the following protocol entities:
a service data adaptation protocol DSAP-core network CN entity; and
a DSAP-Uu entity.

13. The method according to any one of claims 1 to 12, wherein the method further comprises:
receiving, by the terminal, a second configuration issued by a network-side device, wherein the second configuration is used for reconfiguring the dedicated bearer.

14. The method according to claim 13, wherein in a case that a configuration changed by the second configuration does not affect layer 2, a state variable of a packet data convergence protocol PDCP entity and a state variable of a radio link control RLC entity that are corresponding to the dedicated bearer are maintained; or
in a case that a configuration changed by the second configuration has no explicit reset or no explicit reconstruction indication, a state variable of a packet data convergence protocol PDCP entity and a state variable of a radio link control RLC entity that are corresponding to the dedicated bearer are maintained; or
in a case that a configuration changed by the second configuration affects layer 2, the terminal reconstructs or resets at least one of a PDCP entity and an RLC entity that are corresponding to the dedicated bearer; or
in a case that a configuration changed by the second configuration carries an explicit reset or reconstruction indication, the terminal reconstructs or resets at least one of a PDCP entity and an RLC entity that are corresponding to the dedicated bearer.

15. The method according to claim 13, wherein in a case of cell handover, the second configuration is used for configuring at least one of the following:
reset of an RLC entity corresponding to the dedicated bearer of the terminal; and
handover processing of a PDCP entity corresponding to the dedicated bearer of the terminal, wherein the handover processing comprises at least one of the following:
clearing a buffer and resetting a transmission variable;
retaining a buffer and resetting a transmission variable; and
retaining a buffer and a transmission variable.

16. The method according to any one of claims 1 to 15, wherein the method further comprises:
reporting, by the terminal, capability information of the dedicated bearer.

17. The method according to claim 16, wherein the capability information comprises at least one of the following:
whether the terminal supports the dedicated bearer;
at least one capability of the dedicated bearer supported by the terminal;
whether the terminal supports information collection;
at least one function of information collection supported by the terminal;
a maximum number of dedicated bearers supported by the terminal; and
a capability range of at least one protocol layer corresponding to the dedicated bearer supported by the terminal.

18. An information transmission method, comprising:
sending, by a first radio access network device, a first configuration to a terminal, wherein the first configuration is used for configuring a dedicated bearer for information transmission, and the dedicated bearer is independent of a signaling radio bearer SRB and a data radio bearer DRB; and
receiving, by the first radio access network device, information from the terminal through the dedicated bearer.

19. The method according to claim 18, wherein the dedicated bearer is used for at least one of the following:
information interaction between the terminal and a second radio access network device; and
information interaction between the terminal and a core network function.

20. The method according to claim 18 or 19, wherein the first configuration comprises at least one of the following:
an identity of the dedicated bearer, attribute information of the dedicated bearer, routing-related information of the dedicated bearer, processing information of the dedicated bearer during a handover process, and a mapping of the dedicated bearer.

21. The method according to any one of claims 18 to 20, wherein the first configuration is carried in a configuration message, wherein
the first configuration is carried in a first information field in the configuration message, and the first information field is a configuration information field dedicated to the dedicated bearer; or
the first configuration is carried in a second information field in the configuration message, and the second information field is a configuration information field for multiple types of bearers.

22. The method according to any one of claims 18 to 21, wherein the dedicated bearer has at least one of the following characteristics:
the dedicated bearer is capable of being present with a signaling radio bearer SRB and a data radio bearer DRB;
parallel transmission is capable of being performed over the dedicated bearer, an SRB, and a DRB;
the dedicated bearer is established under a target condition;
an identity of the dedicated bearer is arranged together with an identity of an SRB, or an identity of the dedicated bearer is arranged together with an identity of a DRB, or an identity of the dedicated bearer is arranged independently;
an attribute of the dedicated bearer is configurable;
the dedicated bearer corresponds to at least one quality of service QoS; and
the dedicated bearer supports cell handover.

23. The method according to any one of claims 18 to 22, wherein the dedicated bearer is used for transmitting information about at least one of the following protocol entities:
a service data adaptation protocol DSAP-Uu entity;
a DSAP-Ng entity, wherein the DSAP-Ng entity is used for interaction between the first radio access network device and a core network function; and
a DSAP-Xn entity, wherein the DSAP-Xn entity is used for interaction between the first radio access network device and another radio access network device.

24. The method according to any one of claims 18 to 23, wherein the method further comprises:
sending, by the first radio access network device, a second configuration to the terminal, wherein the second configuration is used for reconfiguring the dedicated bearer.

25. The method according to any one of claims 18 to 24, wherein the method further comprises:
receiving, by the first radio access network device, capability information that is reported by the terminal and that is of the dedicated bearer of the terminal.

26. The method according to any one of claims 18 to 25, wherein the sending, by a first radio access network device, a first configuration to a terminal comprises at least one of the following:
in a case that the first radio access network device triggers information transmission, sending, by the first radio access network device, the first configuration to the terminal;
in a case that the first radio access network device receives a first trigger message sent by a core network for triggering information transmission, sending, by the first radio access network device, the first configuration to the terminal; and
in a case that the first radio access network device receives a second trigger message sent by another radio access network device for triggering information transmission, sending, by the first radio access network device, the first configuration to the terminal.

27. An information transmission method, comprising:
sending, by a core network function, a trigger message for triggering information transmission to a radio access network device; and
receiving, by the core network function, information from the radio access network device or a control node;
wherein the information is information transmitted by a terminal through a dedicated bearer; or the information is information generated based on information transmitted by a terminal through a dedicated bearer; wherein the dedicated bearer is a dedicated bearer for information transmission, and the dedicated bearer is independent of a signaling radio bearer SRB and a data radio bearer DRB.

28. The method according to claim 27, wherein the control node comprises:
a control plane control node, or a user plane control node.

29. The method according to claim 27 or 28, wherein the core network function receives information from the control node through a service data adaptation protocol DSAP-core network CN entity; or
the core network function receives, through a DSAP-Ng entity, information that is sent by the radio access network device and that is processed by the radio access network device.

30. An information transmission apparatus, comprising:
an obtaining module, configured to obtain a first configuration, wherein the first configuration is used for configuring a dedicated bearer for information transmission, and the dedicated bearer is independent of a signaling radio bearer SRB and a data radio bearer DRB; and
a transmission module, configured to transmit information through the dedicated bearer.

31. The apparatus according to claim 30, wherein the apparatus further comprises:
a receiving module, configured to receive a second configuration issued by a network side, wherein the second configuration is used for reconfiguring the dedicated bearer.

32. The apparatus according to claim 30 or 31, wherein the apparatus further comprises:
a reporting module, configured to report capability information of the dedicated bearer.

33. An information transmission apparatus, comprising:
a first sending module, configured to send a first configuration to a terminal, wherein the first configuration is used for configuring a dedicated bearer for information transmission, and the dedicated bearer is independent of a signaling radio bearer SRB and a data radio bearer DRB; and
a first receiving module, configured to receive information from the terminal through the dedicated bearer.

34. The apparatus according to claim 33, wherein the apparatus further comprises:
a second sending module, configured to send a second configuration to the terminal, wherein the second configuration is used for reconfiguring the dedicated bearer.

35. The apparatus according to claim 33 or 34, wherein the apparatus further comprises:
a second receiving module, configured to receive capability information that is reported by the terminal and that is of the dedicated bearer of the terminal.

36. An information transmission apparatus, comprising:
a sending module, configured to send a trigger message for triggering information transmission to a radio access network device; and
a receiving module, configured to receive information from the radio access network device or a control node;
wherein the information is information transmitted by a terminal through a dedicated bearer; or the information is information generated based on information transmitted by a terminal through a dedicated bearer; wherein the dedicated bearer is a dedicated bearer for information transmission, and the dedicated bearer is independent of a signaling radio bearer SRB and a data radio bearer DRB.

37. A terminal, comprising a processor and a memory, wherein the memory stores a program or an instruction capable of running on the processor, and when the program or instruction is executed by the processor, the steps of the information transmission method according to any one of claims 1 to 17 are implemented.

38. A radio access network device, comprising a processor and a memory, wherein the memory stores a program or an instruction capable of running on the processor, and when the program or instruction is executed by the processor, the steps of the information transmission method according to any one of claims 18 to 26 are implemented.

39. A core network function, comprising a processor and a memory, wherein the memory stores a program or an instruction capable of running on the processor, and when the program or instruction is executed by the processor, the steps of the information transmission method according to any one of claims 27 to 29 are implemented.

40. A readable storage medium, wherein the readable storage medium stores a program or an instruction, and when the program or instruction is executed by a processor, the steps of the information transmission method according to any one of claims 1 to 17 are implemented, or the steps of the information transmission method according to any one of claims 18 to 26 are implemented, or the steps of the information transmission method according to any one of claims 27 to 29 are implemented.
